(19) Europäisches Patentamt
European Patent Office
Office européen des brevets

(11) EP 4 079 803 A1

(12) **EUROPEAN PATENT APPLICATION**
published in accordance with Art. 153(4) EPC

(43) Date of publication:
**26.10.2022 Bulletin 2022/43**

(21) Application number: **20901194.9**

(22) Date of filing: **30.09.2020**

(51) International Patent Classification (IPC):
***C08L 7/00*** (2006.01) ***B60C 1/00*** (2006.01)
***C08C 19/25*** (2006.01) ***C08K 3/04*** (2006.01)
***C08K 3/36*** (2006.01) ***C08K 5/548*** (2006.01)
***C08L 15/00*** (2006.01) ***C08L 57/00*** (2006.01)
***C08L 101/00*** (2006.01)

(52) Cooperative Patent Classification (CPC):
**B60C 1/00; C08C 19/25; C08K 3/04; C08K 3/36; C08K 5/548; C08L 7/00; C08L 15/00; C08L 57/00; C08L 101/00;** Y02T 10/86

(86) International application number:
**PCT/JP2020/037120**

(87) International publication number:
**WO 2021/124640 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.12.2019 JP 2019229803**

(71) Applicant: **BRIDGESTONE CORPORATION**
**Chuo-ku**
**Tokyo 104-8340 (JP)**

(72) Inventor: **MIENO, Kana**
**Tokyo 104-8340 (JP)**

(74) Representative: **Marks & Clerk LLP**
**15 Fetter Lane**
**London EC4A 1BW (GB)**

(54) **TIRE**

(57) A tire having excellent wet grip performance and low rolling resistance is provided. This tire is a tire obtained by using a rubber composition that includes a rubber component containing a rubber having an isoprene structure and an aminoalkoxysilane-modified styrene-butadiene rubber having an amount of bonded styrene of 15% or less; a filler containing a silica having a nitrogen adsorption specific surface area (BET method) of 130 $m^2/g$ or more and less than 330 $m^2/g$, the amount of the filler being 40 to 125 parts by mass with respect to 100 parts by mass of the rubber component; and a hydrogenated resin having a softening point of higher than 110°C and having a weight average molecular weight as converted to polystyrene of 200 to 1200 g/mol, the amount of the hydrogenated resin being 5 to 50 parts by mass per 100 parts by mass of the rubber component.

EP 4 079 803 A1

## Description

### Technical Field

The present invention relates to a tire.

### Background Art

From the viewpoint of enhancing the safety of vehicles, various studies have been conducted in order to enhance the braking characteristics and driving characteristics of tires on dry road surface as well as various road surfaces such as wet road surfaces and ice-snow road surfaces. For example, as a rubber composition capable of producing a tread rubber having high braking performance on dry road surfaces and having high braking performance even on wet road surfaces of manholes and the like, which are slippery as compared with asphalt, there is disclosed a rubber composition which is prepared by mixing a rubber component (A) including 70% by mass or more of natural rubber, and by mixing 5 to 50 parts by mass of at least one thermoplastic resin (B) selected from a $C_5$-based resin, a $C_5$- to $C_9$-based resin, a Cg-based resin, a terpene-based resin, a terpene aromatic compound-based resin, a rosin-based resin, a dicyclopentadiene resin, and an alkylphenol-based resin, and 20 to 120 parts by mass of a filler (C) including silica, per 100 parts by mass of the rubber component, and in which the silica content in the filler (C) is 50% to 100% by mass (see, for example, PTL 1).

Furthermore, as a rubber composition for tires capable of enhancing the grip performance on dry road surfaces without impairing the grip performance on wet road surfaces, there is disclosed a rubber composition for tires which contains, with respect to 100 parts by mass of a diene-based rubber component including 70 parts by mass or more of a styrene-butadiene rubber having a styrene content percentage of 20% to 60% by mass among rubber components, each filler from a filler group consisting of 50 to 300 parts by mass of silica, 0 to 150 parts by mass of an inorganic agent represented by general formula: $mM1 \cdot xSiOy \cdot zH_2O$, and 0 to 150 parts by mass of carbon black, such that the total amount of the silica and the inorganic agent is 200 to 350 parts by mass, while the total amount of the silica, the inorganic agent, and the carbon black is 200 to 350 parts by mass, the rubber composition for tires containing a softening agent in an amount of 70% by mass or more with respect to the total amount of fillers and also containing 5 to 60 parts by mass of at least one or more resins having a softening point of 145°C or lower (see, for example, PTL 2).

### Citation List

### Patent Literature

PTL 1: WO 2015/079703
PTL 2: JP 2008-184505 A

## Summary of Invention

### Technical Problem

However, in the rubber compositions disclosed in PTL 1 and PTL 2, there is a demand for further enhancement in the balance between an increase in wet grip performance and a decrease in rolling resistance.

An object of the present invention is to provide a tire having excellent wet grip performance and low rolling resistance, and the present invention is intended to achieve this object.

### Solution to Problem

<1> A tire obtained by using a rubber composition,

the rubber composition including:
a rubber component containing a rubber having an isoprene structure and an aminoalkoxysilane-modified styrene-butadiene rubber having an amount of bonded styrene of 15% or less;
a filler containing a silica having a nitrogen adsorption specific surface area (BET method) of 130 $m^2/g$ or more

and less than 330 $m^2/g$, the amount of the filler being 40 to 125 parts by mass per 100 parts by mass of the rubber component; and
a hydrogenated resin having a softening point of higher than 110°C and having a weight average molecular weight as converted to polystyrene of 200 to 1200 g/mol, the amount of the hydrogenated resin being 5 to 50 parts by mass per 100 parts by mass of the rubber component.

<2> The tire according to <1>, in which the content of the modified styrene-butadiene rubber in the rubber component is 10% to 90% by mass.
<3> The tire according to <1> or <2>, in which the content of the rubber having an isoprene structure in the rubber component is 10% to 90% by mass.
<4> The tire according to any one of <1> to <3>, in which the rubber component further contains a modified styrene-butadiene rubber having an amount of bonded styrene of 30% or more.
<5> The tire according to any one of <1> to <4>, in which the filler further contains carbon black, and the content of the silica in the filler is 70% by mass or more.
<6> The tire according to any one of <1> to <5>, in which the hydrogenated resin is at least one selected from the group consisting of a hydrogenated $C_5$-based resin, a hydrogenated $C_5$-$C_9$-based resin, and a hydrogenated dicyclopentadiene-based resin.
<7> The tire according to any one of <1> to <6>, in which the rubber composition further includes a silane coupling agent having a mercapto group.

Advantageous Effects of Invention

According to the present invention, a tire having excellent wet grip performance and low rolling resistance can be provided.

Description of Embodiments

<Rubber composition>

The rubber composition according to the present invention includes:

a rubber component containing a rubber having an isoprene structure and an aminoalkoxysilane-modified styrene-butadiene rubber having an amount of bonded styrene of 15% or less;
a filler containing a silica having a nitrogen adsorption specific surface area (BET method) of 130 $m^2/g$ or more and less than 330 $m^2/g$, the amount of the filler being 40 to 125 parts by mass per 100 parts by mass of the rubber component; and
a hydrogenated resin having a softening point of higher than 110°C and a weight average molecular weight as converted to polystyrene of 200 to 1200 g/mol, the amount of the hydrogenated resin being 5 to 50 parts by mass per 100 parts by mass of the rubber component.

The "aminoalkoxysilane-modified styrene-butadiene rubber having an amount of bonded styrene of 15% or less" may be referred to as "modified SBR with low amount of bonded styrene". Furthermore, the "hydrogenated resin having a softening point of higher than 110°C and having a weight average molecular weight as converted to polystyrene of 200 to 1200 g/mol" may be referred to as "hydrogenated resin of the present invention".
Furthermore, the nitrogen adsorption specific surface area (BET method) is the nitrogen adsorption method specific surface area ($N_2SA$) measured according to the BET method as defined in ASTM D4567-03 (2007) and may be referred to as "BET specific surface area".
In conventional technologies, the wet grip performance has been enhanced by inorganic fillers such as silica. However, such fillers have a problem that the energy loss is also increased. Furthermore, an investigation has been conducted to provide a rubber composition for a tire tread that achieves an excellent balance between wet grip performance and low rolling resistance performance without impairing the abrasion resistance of a tire, by blending rubbers having different glass transition temperatures (Tg); however, there were also shortcomings in regard to low hysteresis loss performance, abrasion resistance performance, and the like.
Furthermore, in recent years, various studies have been conducted on mixing of a larger amount of a thermoplastic resin in the rubber composition, mixing of a high silica ratio in the filler material, mixing by using a modified polymer that highly disperses silica, and the like; however, there has been a limit to the resolution of trade-off. Particularly, in a technology of mixing a large amount of a softening agent including a thermoplastic resin, there was also a problem that the elastic modulus of rubber is decreased.

In contrast, since the rubber composition according to the present invention has the above-described configuration, a tire obtained from the rubber composition according to the present invention has excellent wet grip performance and low rolling resistance.

The reason for this is not clearly understood; however, the phenomenon is speculated to be due to the following reasons.

The hydrogenated resin of the present invention has a weight average molecular weight as converted to polystyrene of 1200 or less, and since the hydrogenated resin has a low molecular weight, it is highly compatible with the rubber component. Furthermore, since the hydrogenated resin of the present invention has a high softening point, it is considered that the hydrogenated resin reinforces the rubber component and increases the elastic modulus of vulcanized rubber, and it is speculated that the rolling resistance of a tire is decreased. At the same time, the hydrogenated resin of the present invention can impart the flexibility required for road surface grippability to a tire due to its high compatibility, and it is considered that the grippability on a slippery wet road surface, that is, wet grip performance, can be enhanced.

Since the styrene-butadiene rubber included in the rubber composition according to the present invention is modified, the styrene-butadiene rubber has a high interaction with silica as a reinforcing filler, and since the amount of bonded styrene is 15% or less, and the elastic modulus of the tire is not excessively increased, it is considered that the wet grip performance is further enhanced. On the other hand, since the silica has a nitrogen adsorption specific surface area (BET method) of 130 $m^2/g$ or more and less than 330 $m^2/g$ and has a small particle size, it is considered that silica increases the strength of the tire and further decreases rolling resistance. Furthermore, since the rubber composition according to the present invention includes a rubber having an isoprene structure, it is considered that the rubber composition enhances the mechanical strength of the tire and also has excellent abrasion resistance.

From the above, it is considered that a tire obtainable from the rubber composition according to the present invention has excellent wet grip performance and low rolling resistance.

In the following description, the rubber composition and tire according to the present invention will be described in detail.

[Rubber component]

The rubber component contains a rubber having an isoprene structure and an aminoalkoxysilane-modified styrene-butadiene rubber having an amount of bonded styrene of 15% or less (modified SBR with low amount of bonded styrene).

The rubber component may further include a rubber component other than the rubber having an isoprene structure and the modified SBR with low amount of bonded styrene, for example, a modified styrene-butadiene rubber having an amount of bonded styrene of 30% or more.

(Rubber having isoprene structure)

As the rubber component contains a rubber having an isoprene structure, the fracture strength of vulcanized rubber can be increased. As a result, the rolling resistance of the tire can be lowered, and the abrasion resistance of the vulcanized rubber is excellent.

Examples of the rubber having an isoprene structure include natural rubber (NR) and polyisoprene rubber (IR).

The content of the rubber having an isoprene structure in the rubber component further decreases the rolling resistance of the tire, and from the viewpoint of enhancing the abrasion resistance of vulcanized rubber, the content the rubber is preferably 10% to 90% by mass, more preferably 20% to 70% by mass, even more preferably 30% to 65% by mass, still more preferably 35% to 60% by mass, and even more preferably 41% to 57% by mass.

(Modified styrene-butadiene rubber)

The rubber component contains an aminoalkoxysilane-modified styrene-butadiene rubber having an amount of bonded styrene of 15% or less (modified SBR with low amount of bonded styrene).

The amount of bonded styrene for a styrene-butadiene rubber means the proportion of a styrene unit included in the styrene-butadiene rubber.

When the rubber component contains the modified SBR with low amount of bonded styrene, excellent wet grip performance is obtained. The amount of bonded styrene for the modified SBR with low amount of bonded styrene is preferably 14% or less, more preferably 13% or less, and even more preferably 12% or less. Furthermore, the amount of bonded styrene for the modified SBR with low amount of bonded styrene is preferably 5% or more, more preferably 7% or more, and even more preferably 8% or more.

From the viewpoint of enhancing the wet grip performance and further decreasing the rolling resistance, the content of the modified SBR with low amount of bonded styrene in the rubber component is preferably 10% to 90% by

mass, more preferably 15% to 70% by mass, even more preferably 20% to 60% by mass, still more preferably 23% to 58% by mass, even more preferably 28% to 53% by mass, still more preferably 28% to 48% by mass, and even more preferably 31% to 45% by mass.

It is preferable that the rubber component further contains a modified styrene-butadiene rubber having an amount of bonded styrene of 30% or more (hereinafter, may be referred to as "modified SBR with high amount of bonded styrene").

As the rubber component further contains a modified SBR with high amount of bonded styrene in addition to the modified SBR with low amount of bonded styrene, the rolling resistance can be further lowered.

From the viewpoint of further lowering the rolling resistance, the amount of bonded styrene of the modified SBR with high amount of bonded styrene is more preferably 35% or more, even more preferably 38% or more, and still more preferably 39% or more. Furthermore, the amount of bonded styrene for the modified SBR with high amount of bonded styrene is more preferably 60% or less, even more preferably 50% or less, still more preferably 45% or less, even more preferably 43% or less, and still more preferably 42% or less.

When the rubber component contains a modified SBR with high amount of bonded styrene, from the viewpoint of enhancing each of the rolling performance, wet performance, and abrasion performance, the ratio of natural rubber/modified SBR with low amount of bonded styrene/modified SBR with high amount of bonded styrene is preferably 20 to 70/15 to 65/5 to 50, more preferably 20 to 50/20 to 55/5 to 40, and even more preferably 30 to 50/30 to 55/15 to 40, on a mass basis.

The amount of bonded styrene for a modified SBR can be adjusted by means of the quantity of monomers used for the polymerization of the modified SBR, the degree of polymerization, and the like. Furthermore, the amount of bonded styrene for a modified SBR can be determined by an infrared method (Morero method).

Incidentally, the amount of bonded styrene and the amount of vinyl bonds for a polymer such as a modified SBR may be referred to as the microstructure of the polymer.

Aminoalkoxysilane modification is the generic name for modifying groups each having a functional group including at least one nitrogen atom and at least one alkoxysilane group. In the following description, a functional group including at least one nitrogen atom may be referred to as a nitrogen atom-containing group.

It is preferable that the functional group including at least one nitrogen atom (nitrogen atom-containing group) is selected from the following.

That is, it is preferable that the nitrogen atom-containing group is a monovalent group having a functional group selected from the group consisting of a primary amino group, a primary amino group protected with a hydrolysable protective group, an onium salt residue of a primary amine, an isocyanate group, a thioisocyanate group, an imine group, an imine residue, an amide group, a secondary amino group protected with a hydrolysable protective group, a cyclic secondary amino group, an onium salt residue of a cyclic secondary amine, an acyclic secondary amino group, an onium salt residue of an acyclic secondary amine, an isocyanuric acid triester residue, a cyclic tertiary amino group, an acyclic tertiary amino group, a nitrile group, a pyridine residue, an onium salt residue of a cyclic tertiary amine, and an onium salt residue of an acyclic tertiary amine.

The nitrogen atom-containing group may further include at least one selected from the group consisting of a hydrocarbon group and a heteroatom. Here, the hydrocarbon group may be a monovalent hydrocarbon group having 1 to 30 carbon atoms and including a linear, branched, alicyclic, or aromatic ring. Furthermore, the heteroatom may be at least one heteroatom selected from the group consisting of an oxygen atom, a sulfur atom, and a phosphorus atom.

The modification site of the aminoalkoxysilane-modified SBR having an amount of bonded styrene of 15% or less may be a molecular terminal as described above but may also be the main chain.

An SBR having a modified molecular terminal can be produced by reacting various modifying agents with a terminal of an SBR having an active terminal according to the methods described in, for example, WO 2003/046020 and JP 2007-217562 A.

According to one suitable embodiment, the aminoalkoxysilane-modified SBR having an amount of bonded styrene of 15% or less, in which a molecular terminal has been modified, can be produced by reacting a terminal of an SBR having an active terminal and having an amount of cis-1,4-bonds of 75% or more with an aminoalkoxysilane compound according to the methods described in WO 2003/046020 and JP 2007-217562 A, and then reacting the terminal with a carboxylic acid partial ester of a polyhydric alcohol to stabilize the terminal.

The carboxylic acid partial ester of the polyhydric alcohol is an ester between a polyhydric alcohol and a carboxylic acid and means a partial ester having one or more hydroxy groups. Specifically, an ester between a saccharide having 4 or more carbon atoms or a modified saccharide and a fatty acid is preferably used. This ester may be more preferably: (1) a fatty acid partial ester of a polyhydric alcohol, particularly a partial ester (may be any one of a monoester, a diester, and a triester) between a saturated higher fatty acid or unsaturated higher fatty acid having 10 to 20 carbon atoms and a polyhydric alcohol; (2) an ester compound obtained by bonding one to three units of a partial ester of a polyvalent carboxylic acid and a higher alcohol to a polyhydric alcohol; or the like.

Regarding the polyhydric alcohol used as a raw material for the partial ester, preferably a saccharide having

5 or 6 carbon atoms and having at least three hydroxy groups (may be hydrogenated or may be non-hydrogenated), a glycol, a polyhydroxy compound, and the like are used. Furthermore, the raw material fatty acid is preferably a saturated or unsaturated fatty acid having 10 to 20 carbon atoms, and for example, stearic acid, lauric acid, and palmitic acid are used.

Among the fatty acid partial esters of polyhydric alcohols, a sorbitan fatty acid ester is preferred, and specific examples include sorbitan monolauric acid ester, sorbitan monopalmitic acid ester, sorbitan monostearic acid ester, sorbitan tristearic acid ester, sorbitan monooleic acid ester, and sorbitan trioleic acid ester.

The aminoalkoxysilane compound is not particularly limited; however, it is more preferable that the aminoalkoxysilane compound is an aminoalkoxyalkoxysilane compound represented by the following General Formula (i).

$$R^{11}{}_{a}\text{-Si-}(OR^{12})_{4-a} \qquad \text{(i)}$$

In General Formula (i), $R^{11}$ and $R^{12}$ each independently represent a monovalent aliphatic hydrocarbon group having 1 to 20 carbon atoms or a monovalent aromatic hydrocarbon group having 6 to 18 carbon atoms; at least one of $R^{11}$ and $R^{12}$ is substituted with an amino group; a represents an integer of 0 to 2; when a large number of $OR^{12}$'s are present, each $OR^{12}$ may be identical with or different from each other; and an active proton is not included in the molecule.

It is preferable that the modifying group having a functional group including at least one nitrogen atom, at least one alkoxy group, and at least one silane atom is more specifically a modifying group derived from a hydrocarbyloxysilane compound represented by the following General Formula (II).

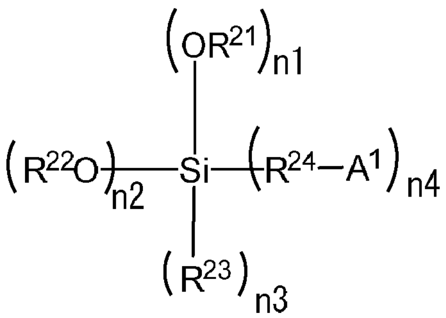

(II)

In the General Formula (II), n1 + n2 + n3 + n4 = 4 (provided that n2 represents an integer of 1 to 4; and n1, n3, and n4 each represent an integer of 0 to 3); $A^1$ represents at least one functional group selected from a saturated cyclic tertiary amine compound residue, an unsaturated cyclic tertiary amine compound residue, a ketimine residue, a nitrile group, a (thio)isocyanate group (represents an isocyanate group or a thioisocyanate group; hereinafter, the same), a (thio)epoxy group, an isocyanuric acid trihydrocarbyl ester group, a carbonic acid dihydrocarbyl ester group, a nitrile group, a pyridine group, a (thio)ketone group, a (thio)aldehyde group, an amide group, a (thio)carboxylic acid ester group, a metal salt of a (thio)carboxylic acid ester, a carboxylic acid anhydride residue, a carboxylic acid halogen compound residue, and a primary or secondary amino group or a mercapto group, both having a hydrolysable group, when n4 is two or greater, $A^1$'s may be identical or different; $A^1$ may be a divalent group that is bonded to Si and forms a cyclic structure; $R^{21}$ represents a monovalent aliphatic or alicyclic hydrocarbon group having 1 to 20 carbon atoms, or a monovalent aromatic hydrocarbon group having 6 to 18 carbon atoms, when n1 is 2 or greater, $R^{21}$'s may be identical or different; $R^{23}$ represents a monovalent aliphatic or alicyclic hydrocarbon group having 1 to 20 carbon atoms, a monovalent aromatic hydrocarbon group having 6 to 18 carbon atoms, or a halogen atom (fluorine, chlorine, bromine, or iodine), when n3 is 2 or greater, $R^{23}$'s may be identical or different; $R^{22}$ represents a monovalent aliphatic or alicyclic hydrocarbon group having 1 to 20 carbon atoms or a monovalent aromatic hydrocarbon group having 6 to 18 carbon atoms, all may contain a nitrogen atom and/or a silicon atom, when n2 is 2 or greater, $R^{22}$'s may be identical with or different from each other, or $R^{22}$'s may be bonded together to form a ring; $R^{24}$ represents a divalent aliphatic or alicyclic hydrocarbon group having 1 to 20 carbon atoms or a divalent aromatic hydrocarbon group having 6 to 18 carbon atoms, and when n4 is 2 or greater, $R^{24}$'s may be identical or different.

The hydrolysable group in the primary or secondary amino group having a hydrolysable group or the mercapto group having a hydrolysable group is preferably a trimethylsilyl group or a tert-butyldimethylsilyl group, and particularly preferably a trimethylsilyl group.

Incidentally, according to the present invention, the "monovalent aliphatic or alicyclic hydrocarbon group having 1 to 20 carbon atoms" refers to "a monovalent aliphatic hydrocarbon group having 1 to 20 carbon atoms or a monovalent alicyclic hydrocarbon group having 3 to 20 carbon atoms". The same also applies to the case of a divalent hydrocarbon group.

As a specific example of the hydrocarbyloxysilane compound represented by General Formula (II), [N,N-bis(trimethylsilyl)-(3-amino-1-propyl)](methyl)(diethoxy)silane may be suitably mentioned.

In addition, it is more preferable that the hydrocarbyloxysilane compound represented by General Formula (II) is a hydrocarbyloxysilane compound represented by the following General Formula (III).

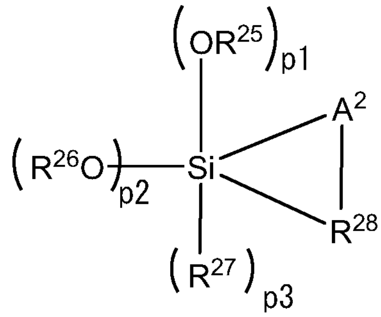

(III)

In the General Formula (III), p1 + p2 + p3 = 2 (provided that p2 represents an integer of 1 to 2; and p1 and p3 each represent an integer of 0 to 1); and $A^2$ represents NRa (Ra represents a monovalent hydrocarbon group, a hydrolysable group, or a nitrogen-containing organic group. The hydrolysable group is preferably a trimethylsilyl group or a tert-butyldimethylsilyl group, and particularly preferably a trimethylsilyl group), or sulfur. $R^{25}$ represents a monovalent aliphatic or alicyclic hydrocarbon group having 1 to 20 carbon atoms or a monovalent aromatic hydrocarbon group having 6 to 18 carbon atoms. $R^{27}$ represents a monovalent aliphatic or alicyclic hydrocarbon group having 1 to 20 carbon atoms, a monovalent aromatic hydrocarbon group having 6 to 18 carbon atoms, or a halogen atom (fluorine, chlorine, bromine, or iodine). $R^{26}$ represents a monovalent aliphatic or alicyclic hydrocarbon group having 1 to 20 carbon atoms, a monovalent aromatic hydrocarbon group having 6 to 18 carbon atoms, or a nitrogen-containing organic group, all may contain a nitrogen atom and/or a silicon atom, and when p2 is 2, $R^{26}$'s may be identical with or different from each other, or $R^{26}$'s may be joined together to form a ring. $R^{28}$ represents a divalent aliphatic or alicyclic hydrocarbon group having 1 to 20 carbon atoms or a divalent aromatic hydrocarbon group having 6 to 18 carbon atoms.

In addition, it is more preferable that the hydrocarbyloxysilane compound represented by General Formula (II) is a hydrocarbyloxysilane compound represented by the following General Formula (IV) or (V).

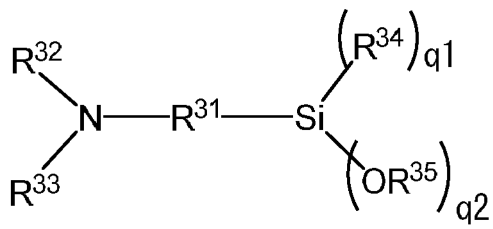

(IV)

In the General Formula (IV), q1 + q2 = 3 (provided that q1 represents an integer of 0 to 2; and q2 represents an integer of 1 to 3). $R^{31}$ represents a divalent aliphatic or alicyclic hydrocarbon group having 1 to 20 carbon atoms or a divalent aromatic hydrocarbon group having 6 to 18 carbon atoms. $R^{32}$ and $R^{33}$ each independently represent a hydrolysable group, a monovalent aliphatic or alicyclic hydrocarbon group having 1 to 20 carbon atoms, or a monovalent aromatic hydrocarbon group having 6 to 18 carbon atoms. $R^{34}$ represents a monovalent aliphatic or alicyclic hydrocarbon group having 1 to 20 carbon atoms or a monovalent aromatic hydrocarbon group having 6 to 18 carbon atoms, and when q1 is 2, $R^{34}$'s may be identical or different. $R^{35}$ represents a monovalent aliphatic or alicyclic hydrocarbon group having 1 to 20 carbon atoms or a monovalent aromatic hydrocarbon group having 6 to 18 carbon atoms, and when q2 is 2 or greater, $R^{35}$'s may be identical or different.

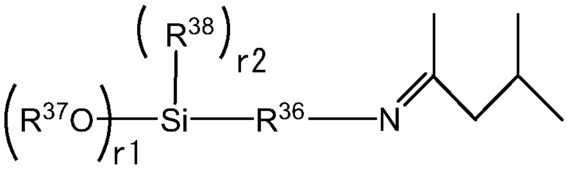

(V)

In the General Formula (V), r1 + r2 = 3 (provided that r1 represents an integer of 1 to 3; and r2 represents an integer of 0 to 2). $R^{36}$ represents a divalent aliphatic or alicyclic hydrocarbon group having 1 to 20 carbon atoms or a divalent aromatic hydrocarbon group having 6 to 18 carbon atoms. $R^{37}$ represents a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group having 1 to 20 carbon atoms or a monovalent aromatic hydrocarbon group having 6 to 18 carbon atoms, and when r1 is 2 or greater, $R^{37}$'s may be identical or different. $R^{38}$ represents a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms, and when r2 is 2, $R^{38}$'s may be identical or different.

Furthermore, it is preferable that the modifying agent is a hydrocarbyloxysilane compound having two or more nitrogen atoms, which is represented by the following General Formula (VI) or (VII).

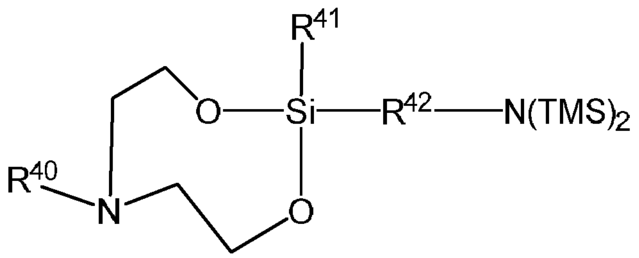

(VI)

In the General Formula (VI), TMS represents a trimethylsilyl group. $R^{40}$ represents a monovalent aliphatic or alicyclic hydrocarbon group having 1 to 20 carbon atoms or a monovalent aromatic hydrocarbon group having 6 to 18 carbon atoms. $R^{41}$ represents a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms. $R^{42}$ represents a divalent aliphatic or alicyclic hydrocarbon group having 1 to 20 carbon atoms or a divalent aromatic hydrocarbon group having 6 to 18 carbon atoms.

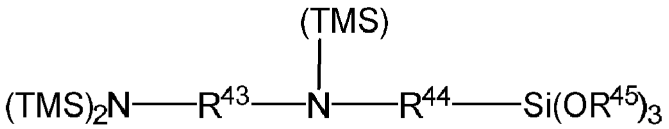

(VII)

In the General Formula (VII), TMS represents a trimethylsilyl group. $R^{43}$ and $R^{44}$ each independently represent a divalent aliphatic or alicyclic hydrocarbon group having 1 to 20 carbon atoms or a divalent aromatic hydrocarbon group having 6 to 18 carbon atoms. $R^{45}$ represents a monovalent aliphatic or alicyclic hydrocarbon group having 1 to 20 carbon atoms or a monovalent aromatic hydrocarbon group having 6 to 18 carbon atoms. A plurality of $R^{45}$'s may be identical or different.

Furthermore, it is more preferable that the hydrocarbyloxysilane compound represented by General Formula (II) is a hydrocarbyloxysilane compound represented by the following General Formula (VIII).

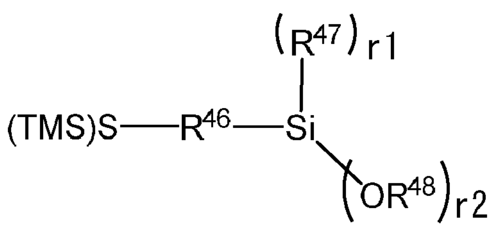

(VIII)

In the General Formula (VIII), r1 + r2 = 3 (provided that r1 represents an integer of 0 to 2; and r2 represents an integer of 1 to 3). TMS represents a trimethylsilyl group. $R^{46}$ represents a divalent aliphatic or alicyclic hydrocarbon group having 1 to 20 carbon atoms or a divalent aromatic hydrocarbon group having 6 to 18 carbon atoms. $R^{47}$ and $R^{48}$ each independently represent a monovalent aliphatic or alicyclic hydrocarbon group having 1 to 20 carbon atoms or a monovalent aromatic hydrocarbon group having 6 to 18 carbon atoms. A plurality of $R^{47}$'s or $R^{48}$'s may be identical or

different.

Furthermore, it is preferable that the above-described modifying agent is a hydrocarbyloxysilane compound represented by the following General Formula (IX).

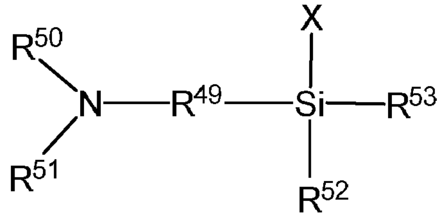

(IX)

In the General Formula (IX), X represents a halogen atom (fluorine, chlorine, bromine, or iodine). $R^{49}$ represents a divalent aliphatic or alicyclic hydrocarbon group having 1 to 20 carbon atoms or a divalent aromatic hydrocarbon group having 6 to 18 carbon atoms. $R^{50}$ and $R^{51}$ each independently represent a hydrolysable group, a monovalent aliphatic or alicyclic hydrocarbon group having 1 to 20 carbon atoms or a monovalent aromatic hydrocarbon group having 6 to 18 carbon atoms, or $R^{50}$ and $R^{51}$ may be bonded to form a divalent organic group, and $R^{52}$ and $R^{53}$ each independently represent a halogen atom (fluorine, chlorine, bromine, or iodine), a hydrocarbyloxy group, a monovalent aliphatic or alicyclic hydrocarbon group having 1 to 20 carbon atoms, or a monovalent aromatic hydrocarbon group having 6 to 18 carbon atoms. $R^{50}$ and $R^{51}$ are each preferably a hydrolysable group, and the hydrolysable group is preferably a trimethylsilyl group or a tert-butyldimethylsilyl group, and particularly preferably a trimethylsilyl group.

Furthermore, it is preferable that the modifying agent is a compound having a structure represented by any one of the following General Formula (X) to (XIII).

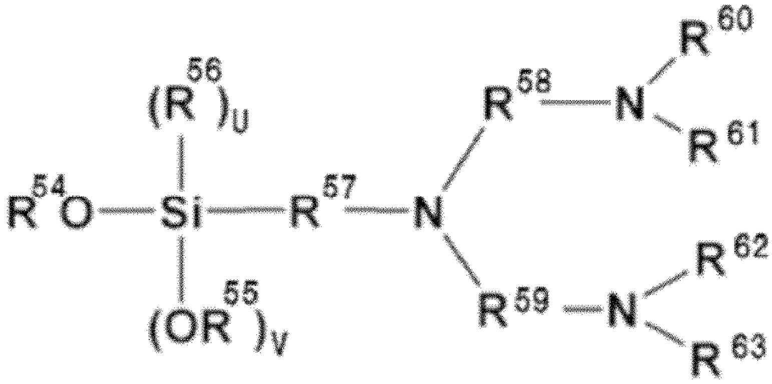

··· (X)

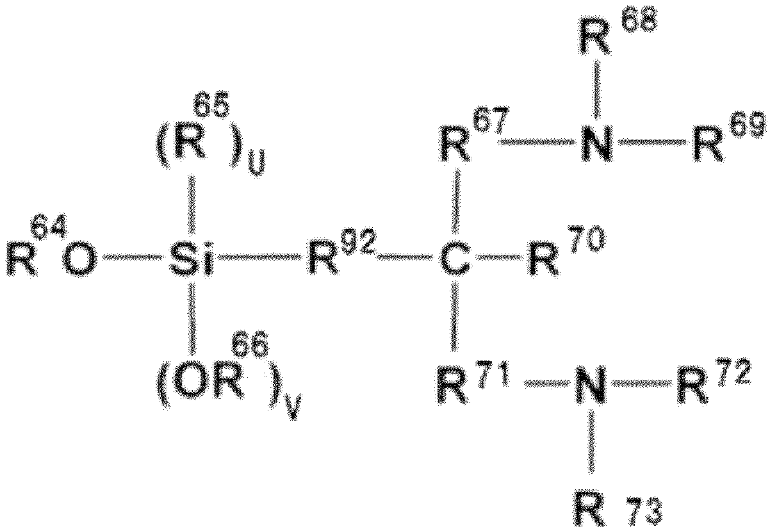

··· (XI)

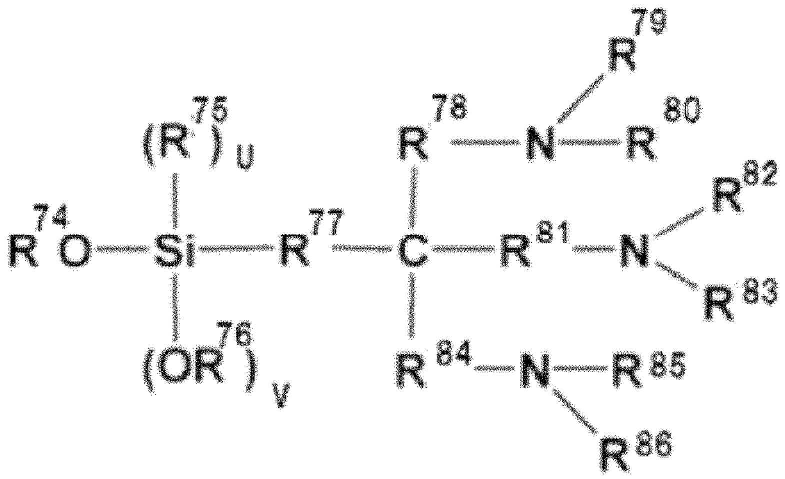

... (XII)

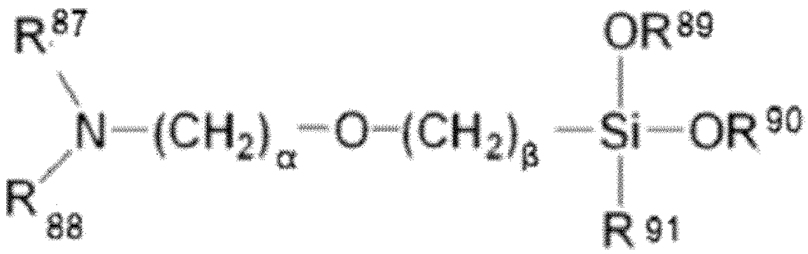

... (XIII)

Here, the symbols U and V included in Formulae (X) to (XII) each represent an integer of 0 to 2, which satisfy the equation: U + V = 2. Furthermore, $R^{54}$ to $R^{92}$ in Formula (X) to (XIII) may be identical or different, and each of them represents a monovalent or divalent aliphatic or alicyclic hydrocarbon having 1 to 20 carbon atoms or a monovalent or divalent aromatic hydrocarbon group having 6 to 18 carbon atoms. Furthermore, $\alpha$ and $\beta$ in Formula (XIII) each represent an integer of 0 to 5.

Furthermore, among the compounds that satisfy Formulae (X) to (XII), particularly N1,N1,N7-tetramethyl-4-((trimethoxysilyl)methyl)-1,7-heptane, 2-((hexyl-dimethoxysilyl)methyl)-N1,N1,N3,N3-2-pentamethylpropane-1,3-diamine, N1-(3-(dimethylamino)propyl)-N3,N3-dimethyl-N1-(3-(trimethoxysilyl)propyl)propane-1,3-diamine, and 4-(3-(dimethylamino)propyl)-N1,N1,N7,N7-tetramethyl-4-((trimethoxysilyl)methyl)heptane-1,7-diamine are preferred.

Among the compounds that satisfy Formula (XIII), particularly N,N-dimethyl-2-(3-(dimethoxymethylsilyl)propoxy)ethanamine, N,N-bis(trimethylsilyl)-2-(3-(trimethoxysilyl)propoxy)ethanamine, N,N-dimethyl-2-(3-(trimethoxysilyl)propoxy)ethanamine, and N,N-dimethyl-3-(3-(trimethoxysilyl)propoxy)propan-1-amine are preferred.

It is preferable that the hydrocarbyloxysilane compounds represented by the above-described General Formulae (II) to (XIII) are used as modifying agents in a case where the modified polymer that may be contained in the polymer phase having the lowest peak temperature in the tan $\delta$ temperature dispersion curve is produced by anionic polymerization.

Furthermore, it is preferable that the hydrocarbyloxysilane compounds represented by General Formulae (II) to (XIII) are alkoxysilane compounds.

With regard to the rubber composition according to the present invention, it is preferable that a modified conjugated diene-based polymer (A1) is formed by reacting a conjugated diene-based polymer with a coupling agent represented by the following General Formula (1). In this case, the low hysteresis loss and abrasion resistance of the rubber composition can be further enhanced.

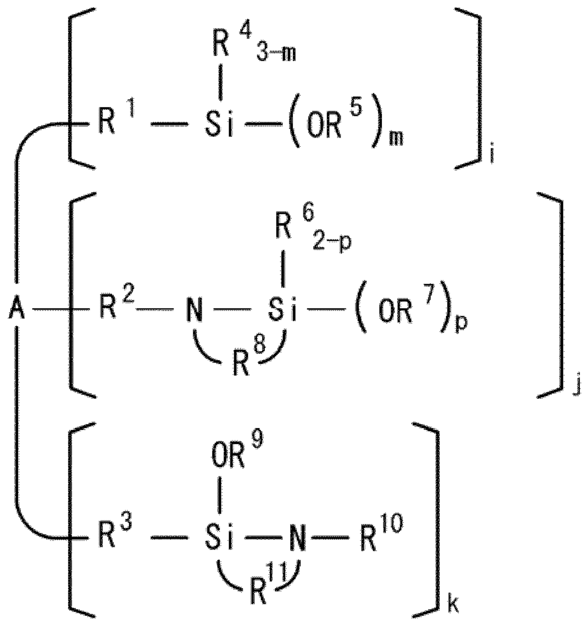

· · · (1)

In Formula (1), $R^1$, $R^2$, and $R^3$ each independently represent a single bond or an alkylene group having 1 to 20 carbon atoms. $R^4$, $R^5$, $R^6$, $R^7$, and $R^9$ each independently represent an alkyl group having 1 to 20 carbon atoms. $R^8$ and $R^{11}$ each independently represent an alkylene group having 1 to 20 carbon atoms. $R^{10}$ represents an alkyl group or a trialkylsilyl group, each having 1 to 20 carbon atoms. m represents an integer of 1 to 3, and p represents 1 or 2. Regarding $R^1$ to $R^{11}$, m, and p, when a plurality of each of these groups exist, they are independent of each other. i, j, and k each independently represent an integer of 0 to 6. However, (i + j + k) represents an integer of 3 to 10. A represents a hydrocarbon group or an organic group that has at least one atom selected from the group consisting of an oxygen atom, a nitrogen atom, a silicon atom, a sulfur atom, and a phosphorus atom and does not have active hydrogen, both the hydrocarbon group and the organic group having 1 to 20 carbon atoms.

Generally, a branched polymer tends to have a smaller molecule size when compared with a linear polymer having the same absolute molecular weight, and the shrinkage factor (g') is an index of the ratio of the size occupied by the molecule with respect to a linear polymer assumed to have the same absolute molecular weight. That is, when the degree of branching of a polymer increases, the shrinkage factor (g') tends to decrease. In the present embodiment, the intrinsic viscosity is used as the index for the molecule size, and for the linear polymer, a linear polymer that conforms to the relational formula of intrinsic viscosity $[\eta] = -3.883M^{0.771}$ is used. The shrinkage factor (g') at each absolute molecular weight of the modified conjugated diene-based polymer is calculated, and the average value of the shrinkage factor (g') when the absolute molecular weight is $100\times10^4$ to $200\times10^4$ is designated as the shrinkage factor (g') of the modified conjugated diene-based polymer.

Here, the "branch" is formed as one polymer is directly or indirectly bonded to another polymer. Furthermore, the "degree of branching" is the number of polymers directly or indirectly bonded to each other with respect to one branch. For example, when the five conjugated diene-based polymer chains that will be described below are indirectly bonded to each other by means of the coupling residue that will be described below, the degree of branching is 5. Incidentally, the coupling residue is a constituent unit of a modified conjugated diene-based polymer, the constituent unit being bonded to the conjugated diene-based polymer chain, and the coupling residue is, for example, a structural unit derived from a coupling agent, which is produced by reacting the conjugated diene-based polymer that will be described below with a coupling agent. Furthermore, the conjugated diene-based polymer chain is a constituent unit of the modified conjugated diene-based polymer and is, for example, a structural unit derived from a conjugated diene-based polymer, which is produced by reacting the conjugated diene-based polymer that will be described below with a coupling agent.

The shrinkage factor (g') is less than 0.64, preferably 0.63 or less, more preferably 0.60 or less, even more preferably 0.59 or less, and still more preferably 0.57 or less. Furthermore, the lower limit of the shrinkage factor (g') is not particularly limited and may be less than or equal to the detection limit value; however, the lower limit is preferably 0.30 or more, more preferably 0.33 or more, even more preferably 0.35 or more, and still more preferably 0.45 or more. By using a modified conjugated diene-based polymer (A1) having the shrinkage factor (g') in this range, the processability of the rubber composition is enhanced.

Since the shrinkage factor (g') tends to be dependent on the degree of branching, for example, the shrinkage factor (g') can be controlled by using the degree of branching as an index. Specifically, when a modified conjugated

diene-based polymer having a degree of branching of 6 is employed, the shrinkage factor (g') thereof tends to be 0.59 or greater and 0.63 or less, and when a modified conjugated diene-based polymer having a degree of branching of 8 is employed, the shrinkage factor (g') thereof tends to be 0.45 or more and 0.59 or less. The shrinkage factor (g') is measured by the method described in the Examples that will be described below.

It is preferable that the modified conjugated diene-based polymer (A1) has a branch, and the degree of branching is 5 or more. Furthermore, it is more preferable that the modified conjugated diene-based polymer (A1) has one or more coupling residues and a conjugated diene-based polymer chain that is bonded to the coupling residues, and the branch includes a branch in which 5 or more units of this conjugated diene-based polymer chain are bonded to one unit of this coupling residue. By setting the degree of branching to be 5 or more, and by specifying the structure of the modified conjugated diene-based polymer such that the branch includes a branch in which 5 or more units of the conjugated diene-based polymer chain are bonded to one unit of the coupling residue, the shrinkage factor (g') can be more reliably adjusted to be less than 0.64. Incidentally, the number of the conjugated diene-based polymer chains bonded to one coupling residue can be checked from the value of the shrinkage factor (g').

Furthermore, it is more preferable that the modified conjugated diene-based polymer (A1) has a branch, and the degree of branching is 6 or more. Furthermore, it is even more preferable that the modified conjugated diene-based polymer (A1) has one or more coupling residues and a conjugated diene-based polymer chain that is bonded to the coupling residue, and that the branch includes a branch in which 6 or more units of this conjugated diene-based polymer chain are bonded to one unit of this coupling residue. By setting the degree of branching to be 6 or more, and by specifying the structure of the modified conjugated diene-based polymer such that the branch includes a branch in which 6 or more units of the conjugated diene-based polymer chain are bonded to one unit of the coupling residue, the shrinkage factor (g') can be adjusted to be 0.63 or less.

In addition, it is even more preferable that the modified conjugated diene-based polymer (A1) has a branch, and the degree of branching is 7 or more, and it is still more preferable that the degree of branching is 8 or more. The upper limit of the degree of branching is not particularly limited; however, it is preferable that the upper limit is 18 or less. Furthermore, it is still more preferable that the modified conjugated diene-based polymer (A1) has one or more coupling residues and a conjugated diene-based polymer chain that is bonded to the coupling residue, and the branch includes a branch in which 7 or more units of the conjugated diene-based polymer chain are bonded to one unit of the coupling residue, and it is particularly preferable that the branch includes a branch in which 8 or more units of the conjugated diene-based polymer chain are bonded to one unit of the coupling residue. By setting the degree of branching to be 8 or more, and by specifying the structure of the modified conjugated diene-based polymer such that the branch includes a branch in which 8 or more units of the conjugated diene-based polymer chain are bonded to one unit of the coupling residue, the shrinkage factor (g') can be adjusted to be 0.59 or less.

It is preferable that the modified conjugated diene-based polymer (A1) has a nitrogen atom and a silicon atom. In this case, the processability of the rubber composition is improved, and the low hysteresis loss and abrasion resistance of the rubber composition can be further enhanced. Incidentally, whether the modified conjugated diene-based polymer (A1) has a nitrogen atom can be checked by the presence or absence of adsorption to a specific column by the method described in the Examples that will be described below. Furthermore, whether the modified conjugated diene-based polymer (A1) has a silicon atom can be checked by a metal analysis by the method described in the Examples that will be described below.

It is preferable that at least one terminal of the conjugated diene-based polymer chain is each bonded to the silicon atom carried by the coupling residue. In this case, the terminals of a plurality of conjugated diene-based polymer chains may be bonded to one silicon atom. Furthermore, a terminal of a conjugated diene-based polymer chain and an alkoxy group having 1 to 20 carbon atoms or a hydroxy group may be bonded to one silicon atom, and consequently, the one silicon atom may constitute an alkoxysilyl group having 1 to 20 carbon atoms or a silanol group.

The modified conjugated diene-based copolymer (A1) can be produced into an oil-extended polymer to which an extender oil is added. This modified conjugated diene-based copolymer (A1) may be non-oil-extended or oil-extended; however, from the viewpoint of abrasion resistance, the Mooney viscosity measured at 100°C is preferably 20 or higher and 100 or lower, and more preferably 30 or higher and 80 or lower. Incidentally, the Mooney viscosity is measured by the method described in the Examples that will be described below.

The weight average molecular weight (Mw) of the modified conjugated diene-based polymer (A1) is $20\times10^4$ or more and $300\times10^4$ or less, preferably $50\times10^4$ or more, more preferably $64\times10^4$ or more, and even more preferably $80\times10^4$ or more. Furthermore, the weight average molecular weight is preferably $250\times10^4$ or less, more preferably $180\times10^4$ or less, and even more preferably $150\times10^4$ or less. When the weight average molecular weight is less than $20\times10^4$, the low hysteresis loss and abrasion resistance of the rubber composition cannot be sufficiently enhanced. Furthermore, when the weight average molecular weight is more than $300\times10^4$, the processability of the rubber composition is deteriorated. The weight average molecular weights of the modified conjugated diene-based polymer (A1) and the conjugated diene-based polymer that will be described below are measured by the method described in the Examples that will be described below.

The modified conjugated diene-based polymer (A1) includes 0.25% by mass or more and 30% by mass or less of a modified conjugated diene-based polymer having a molecular weight of $200\times10^4$ or more and $500\times10^4$ or less (hereinafter, also referred to as "specific high-molecular weight component") with respect to the total amount (100% by mass) of the modified conjugated diene-based polymer. When the content of the specific high-molecular weight component is less than 0.25% by mass or more than 30% by mass, the low hysteresis loss and abrasion resistance of the rubber composition cannot be sufficiently enhanced.

The modified conjugated diene-based polymer (A1) includes the specific high-molecular weight component at a proportion of preferably 1.0% by mass or more, more preferably 1.4% by mass or more, even more preferably 1.75% by mass or more, still more preferably 2.0% by mass or more, particularly preferably 2.15% by mass or more, and extremely preferably 2.5% by mass or more. Furthermore, the modified conjugated diene-based polymer (A1) includes the specific high-molecular weight component at a proportion of preferably 28% by mass or less, more preferably 25% by mass or less, even more preferably 20% by mass or less, and still more preferably 18% by mass or less.

Incidentally, the "molecular weight" according to the present specification is the molecular weight calculated relative to polystyrene standards, which is obtainable by GPC (gel permeation chromatography). In order to obtain a modified conjugated diene-based polymer (A1) having the content of the specific high-molecular weight component in such a range, it is preferable to control the reaction conditions for the polymerization step and reaction step, which will be described below. For example, in the polymerization step, the amount of use of the organomonolithium compound, which will be described below, as a polymerization initiator may be adjusted. Furthermore, in the polymerization step, a method having a retention time distribution is used for both the continuous type and the batch type polymerization mode, that is, it is desirable to broaden the time distribution of the growth reaction.

With regard to the modified conjugated diene-based polymer (A1), the molecular weight distribution (Mw/Mn) represented by the ratio of the weight average molecular weight (Mw) with respect to the number average molecular weight (Mn) is preferably 1.6 or more and 3.0 or less. When the molecular weight distribution of the modified conjugated diene-based polymer (A1) is in this range, the processability of the rubber composition is improved.

Incidentally, the number average molecular weight, the weight average molecular weight, the molecular weight distribution, and the content of the specific high-molecular weight component for the modified conjugated diene-based polymer (A1) and the conjugated diene-based polymer that will be described below are measured by the methods described in the Examples that will be described below.

The method of producing the modified conjugated diene-based polymer (A1) is not particularly limited; however, it is preferable that the method has a polymerization step of polymerizing at least a conjugated diene compound by using an organomonolithium compound as a polymerization initiator and obtaining a conjugated diene-based polymer; and a reaction step of reacting an active terminal of the conjugated diene-based polymer with a pentafunctional or higher-functional reactive compound (hereinafter, may also be referred to as "coupling agent"). It is preferable that the coupling agent is reacted with a pentafunctional or higher-functional reactive compound having a nitrogen atom and a silicon atom.

It is preferable that the modified conjugated diene-based polymer (A1) is formed by reacting a conjugated diene-based polymer with the coupling agent represented by General Formula (1). By using the modified conjugated diene-based polymer (A1) formed by reacting with the coupling agent, the low hysteresis loss and abrasion resistance of the rubber composition can be further enhanced.

In General Formula (1), $R^1$, $R^2$, and $R^3$ each independently represent a single bond or an alkylene group having 1 to 20 carbon atoms; $R^4$, $R^5$, $R^6$, $R^7$, and $R^9$ each independently represent an alkyl group having 1 to 20 carbon atoms; $R^8$ and $R^{11}$ each independently represent an alkylene group having 1 to 20 carbon atoms; $R^{10}$ represents an alkyl group or a trialkylsilyl group having 1 to 20 carbon atoms; m represents an integer of 1 to 3; p represents 1 or 2; when plural numbers of $R^1$ to $R^{11}$, m, and p are present, they are each independent; i, j, and k each independently represent an integer of 0 to 6, provided that (i + j + k) represents an integer of 3 to 10; and A represents a hydrocarbon group having 1 to 20 carbon atoms or an organic group that has at least one atom selected from the group consisting of an oxygen atom, a nitrogen atom, a silicon atom, a sulfur atom, and a phosphorus atom but does not have active hydrogen.

Here, in General Formula (1), the hydrocarbon group represented by A includes saturated, unsaturated, aliphatic, and aromatic hydrocarbon groups. Examples of the organic group that does not have active hydrogen include organic groups that do not have functional groups having active hydrogen, such as a hydroxy group (-OH), a secondary amino group (>NH), a primary amino group ($-NH_2$), and a sulfhydryl group (-SH).

The polymerization step is preferably polymerization by a growth reaction by means of a living anionic polymerization reaction, thereby a conjugated diene-based polymer having an active terminal can be obtained, and a modified diene-based polymer (A1) having a high modification ratio can be obtained.

The conjugated diene-based polymer is obtained by polymerizing at least a conjugated diene compound and is obtained by copolymerizing both a conjugated diene compound and a vinyl-substituted aromatic compound as necessary.

The conjugated diene compound is preferably a conjugated diene compound having 4 to 12 carbon atoms, and more preferably a conjugated diene compound having 4 to 8 carbon atoms. Examples of such a conjugated diene

compound include 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, from the viewpoint of easy industrial availability, 1,3-butadiene and isoprene are preferred. Regarding these conjugated diene compounds, one kind thereof may be used alone, or two or more kinds thereof may be used in combination.

Furthermore, the vinyl-substituted aromatic compound is preferably a monovinyl aromatic compound. Examples of the monovinyl aromatic compound include styrene, p-methylstyrene, α-methylstyrene, vinylethylbenzene, vinylxylene, vinylnaphthalene, and diphenylethylene. Among these, from the viewpoint of easy industrial availability, styrene is preferred. Regarding these vinyl-substituted aromatic compounds, one kind thereof may be used alone, or two or more kinds thereof may be used in combination.

It is preferable that the amount of use of the organomonolithium compound as a polymerization initiator is determined by the molecular weight of the target conjugated diene-based polymer or modified conjugated diene-based polymer. The amount of use of monomers such as a conjugated diene compound with respect to the amount of use of the polymerization initiator correlates to the degree of polymerization, that is, correlates to the number average molecular weight and/or weight average molecular weight. Therefore, in order to increase the molecular weight, adjustment may be made in the direction of decreasing the polymerization initiator, and in order to decrease the molecular weight, adjustment may be made in the direction of increasing the amount of the polymerization initiator.

From the viewpoints of easy industrial availability and easy control of the polymerization reaction, the organomonolithium compound is preferably an alkyllithium compound. In this case, a conjugated diene-based polymer having an alkyl group at the polymerization initiation terminal is obtained. Examples of the alkyllithium compound include n-butyllithium, sec-butyllithium, tert-butyllithium, n-hexyllithium, benzyllithium, phenyllithium, and stilbene lithium. From the viewpoints of easy industrial availability and easy control of the polymerization, the alkyllithium compound is preferably n-butyllithium and sec-butyllithium. Regarding these organomonolithium compounds, one kind thereof may be used alone, or two or more kinds thereof may be used in combination.

In the polymerization step, examples of the polymerization reaction mode include batch type and continuous type polymerization reaction modes. With regard to the continuous type, one or two or more connected reactors can be used. Regarding a continuous type reactor, for example, a tank type reactor with a stirrer and a tubular reactor are used. With regard to the continuous type, preferably, monomers, an inert solvent, and a polymerization initiator are continuously fed into a reactor, a polymer solution including a polymer is obtained in the reactor, and the polymer solution is continuously discharged. With regard to the batch type reactor, for example, a tank type reactor with a stirrer is used. With regard to the batch type, preferably, monomers, an inert solvent, and a polymerization initiator are feed, monomers are continuously or intermittently added during polymerization as necessary, a polymer solution including a polymer is obtained in the reactor, and the polymer solution is discharged after completion of polymerization. According to the present embodiment, in order to obtain a conjugated diene-based polymer having an active terminal at a high proportion, the continuous type in which the polymer can be continuously discharged and subjected to a subsequent reaction in a short time period, is preferred.

In the polymerization step, it is preferable that polymerization is performed in an inert solvent. Examples of the solvent include hydrocarbon-based solvents such as a saturated hydrocarbon and an aromatic hydrocarbon. Specific examples of the hydrocarbon-based solvent are not limited to the following; however, examples include hydrocarbons consisting of aliphatic hydrocarbons such as butane, pentane, hexane, and heptane; alicyclic hydrocarbons such as cyclopentane, cyclohexane, methylcyclopentane, and methylcyclohexane; aromatic hydrocarbons such as benzene, toluene, and xylene; and mixtures thereof. When allenes and acetylenes, which are impurities, are treated with organometallic compounds before being supplied to the polymerization reaction, it is preferable because a high concentration of a conjugated diene-based polymer having an active terminal tends to be obtained, and a modified conjugated diene-based polymer having a high modification ratio tends to be obtained.

In the polymerization step, a polar compound may be added. By adding a polar compound, an aromatic vinyl compound can be randomly copolymerized with a conjugated diene compound, and there is a tendency that the polar compound can be used also as a vinylating agent for controlling the microstructure of a conjugated diene moiety.

Regarding the polar compound, for example, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkali metal alkoxide compounds such as potassium-tert-amylate, potassium-tert-butylate, sodium-tert-butylate, and sodium amylate; and phosphine compounds such as triphenylphosphine can be used. Regarding these polar compounds, one kind thereof may be used alone, or two or more kinds thereof may be used in combination.

In the polymerization step, from the viewpoint of productivity, the polymerization temperature is preferably 0°C or higher, more preferably 120°C or lower, and particularly preferably 50°C or higher and 100°C or lower. When the polymerization temperature is in such a range, there is a tendency that a sufficient amount of reaction of the coupling agent with respect to the active terminal after completion of polymerization can be secured.

The amount of bonded conjugated dienes in the conjugated diene-based polymer or modified conjugated diene-based polymer (A1) is not particularly limited; however, the amount of bonded conjugated diene is preferably 40% by mass or more and 100% by mass or less, and more preferably 55% by mass or more and 80% by mass or less.

Furthermore, the amount of bonded aromatic vinyl in the conjugated diene-based polymer or modified conjugated diene-based polymer (A1) is not particularly limited; however, the amount of bonded aromatic vinyl is preferably 0% by mass or more and 60% by mass or less, and more preferably 20% by mass or more and 45% by mass or less.

When the amount of bonded conjugated diene and the amount of bonded aromatic vinyl are in the above-described ranges, the low hysteresis loss and abrasion resistance of the rubber composition can be further enhanced.

Incidentally, the amount of bonded aromatic vinyl can be measured by ultraviolet light absorption of a phenyl group, and from this, the amount of bonded conjugated diene can also be determined. Specifically, the amount of bonded aromatic vinyl is measured according to the method described in the Examples that will be described below.

The amount of vinyl bond in the conjugated diene bonded unit in the conjugated diene-based polymer or modified conjugated diene-based polymer (A1) is not particularly limited; however, the amount of vinyl bond is preferably 10 mol% or more and 75 mol% or less, and more preferably 20 mol% or more and 65 mol% or less. When the amount of vinyl bond is in the above-described range, the low hysteresis loss and abrasion resistance of the rubber composition can be further enhanced.

Incidentally, when the modified conjugated diene-based polymer (A1) is a copolymer of butadiene and styrene, the amount of vinyl bond (amount of 1,2-bond) in the butadiene bond unit can be determined by Hampton's method [R.R. Hampton, Analytical Chemistry, 21, 923 (1949)]. Specifically, the amount of vinyl bond is measured by the method described in the Examples that will be described below.

The modified conjugated diene-based polymer (A1) is preferably such that the glass transition temperature (Tg) is -45°C or higher and -15°C or lower. When the glass transition temperature (Tg) of the modified conjugated diene-based polymer (A1) is in the range of -45°C or higher and -15°C or lower, the low hysteresis loss and abrasion resistance of the rubber composition can be further enhanced.

Incidentally, with regard to the glass transition temperature, a DSC curve is recorded while increasing the temperature in a predetermined temperature range according to ISO 22768:2006, and the peak top (Inflection point) of the DSC differential curve is designated as glass transition temperature. Specifically, the glass transition temperature is measured by the method described in the Examples that will be described below.

It is preferable that the reactive compound (coupling agent) is preferably a pentafunctional or higher-functional reactive compound having a nitrogen atom and a silicon atom, and it is preferable that the reactive compound has at least three silicon-containing functional groups. A more preferred coupling agent is a compound in which at least one silicon atom constitutes an alkoxysilyl group having 1 to 20 carbon atoms or a silanol group, and the coupling agent is more preferably a compound represented by the above-described General Formula (1).

The alkoxysilyl group carried by the coupling agent reacts with, for example, an active terminal of a conjugated diene-based polymer, an alkoxylithium is dissociated, and a bond between a terminal of a conjugated diene-based polymer chain and silicon of a coupling residue tends to be formed. The value obtained by subtracting the number of SiOR's decreased by the reaction from the total number of SiOR's carried by one molecule of the coupling agent is the number of alkoxysilyl groups carried by the coupling residue. Furthermore, the azasilacycle group carried by the coupling agent forms a bond between a >N-Li bond as well as a conjugated diene-based polymer terminal, and the silicon of the coupling residue. Incidentally, the >N-Li bond tends to easily become >NH and LiOH by means of water and the like at the time of finishing. Furthermore, with regard to the coupling agent, there is a tendency that an alkoxysilyl group remaining unreacted may easily become a silanol (Si-OH group) by means of water and the like at the time of finishing.

The reaction temperature for the reaction step is preferably a temperature similar to the polymerization temperature for the conjugated diene-based polymer, and the reaction temperature is more preferably 0°C or higher and 120°C or lower, and even more preferably 50°C or higher and 100°C or lower. Furthermore, the temperature change occurring from after the polymerization step until the coupling agent is added is preferably 10°C or less, and more preferably 5°C or less.

The reaction time for the reaction step is preferably 10 seconds or more, and more preferably 30 seconds or more. It is preferable that the time from the completion of the polymerization step to the initiation of the reaction step is shorter from the viewpoint of the coupling ratio; however, the time is more preferably 5 minutes or less.

Mixing for the reaction step may be achieved by any of mechanical stirring, stirring by a static mixer, and the like. When the polymerization step is a continuous type process, it is preferable that the reaction step is also a continuous type process. Regarding the reactor for the reaction step, for example, a tank type reactor with a stirrer or a tubular reactor is used. The coupling agent may be diluted with an inert solvent and continuously supplied to the reactor. When the polymerization step is a batch type process, even in a method of introducing a coupling agent into the polymerization reactor, the reaction step may be carried out after transferring the reactor contents to another reactor.

In the General Formula (1), A is preferably represented by any one of the following General Formulae (2) to (5). When A is represented by any one of General Formulae (2) to (5), a modified conjugated diene-based polymer (A1)

having superior performance can be obtained.

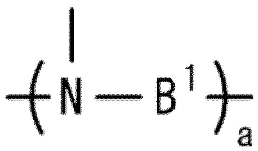

・・・ (2)

In the General Formula (2), $B^1$ represents a single bond or a hydrocarbon group having 1 to 20 carbon atoms; and a represents an integer of 1 to 10. When there are a plurality of $B^1$'s, they are each independent.

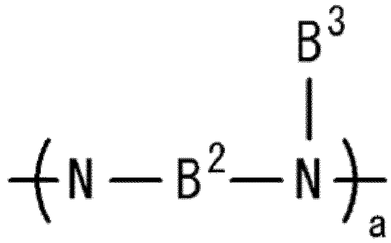

・・・ (3)

In the General Formula (3), $B^2$ represents a single bond or a hydrocarbon group having 1 to 20 carbon atoms; $B^3$ represents an alkyl group having 1 to 20 carbon atoms; and a represents an integer of 1 to 10. When a plurality of $B^2$'s and a plurality of $B^3$'s are present, they are each independent.

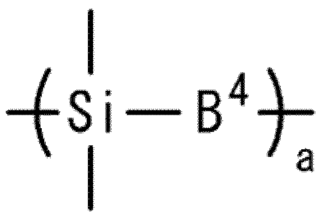

・・・ (4)

In the General Formula (4), $B^4$ represents a single bond or a hydrocarbon group having 1 to 20 carbon atoms; and a represents an integer of 1 to 10. When a plurality of $B^4$'s are present, they are each independent.

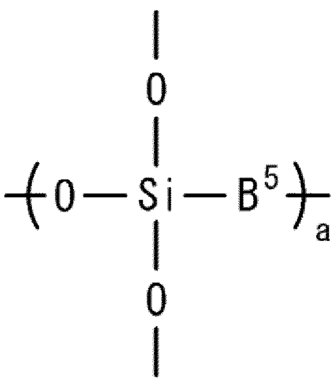

・・・ (5)

In the General Formula (5), $B^5$ represents a single bond or a hydrocarbon group having 1 to 20 carbon atoms; and a represents an integer of 1 to 10. When a plurality of $B^5$'s are present, they are each independent.

Incidentally, with regard to $B^1$, $B^2$, $B^4$, and $B^5$ in the General Formulae (2) to (5), the hydrocarbon group having 1 to 20 carbon atoms may be an alkylene group having 1 to 20 carbon atoms or the like.

Preferably, in the General Formula (1), A is represented by the General Formula (2) or (3); and k represents 0.

More preferably, in the General Formula (1), A is represented by the General Formula (2) or (3); while k represents 0, and in the General Formula (2) or (3), a represents an integer of 2 to 10.

Even more preferably, in the General Formula (1), A is represented by the General Formula (2), while k represents 0, and in the General Formula (2), a represents an integer of 2 to 10.

Examples of such a coupling agent include bis(3-trimethoxysilylpropyl)-[3-(2,2-dimethoxy-1-aza-2-silacyclopentane)propyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, and bis[3-(2,2-dimethoxy-1-aza-2-silacyclopentane)propyl]-(3-trismethoxysilylpropyl)-methyl-1,3-propanediamine, and among these, tetrakis(3-trimethoxysilylpropyl)-1,3-propanediamine and tetrakis(3-trimethoxysilylpropyl)-1,3-bisaminomethylcyclohexane are particularly preferred.

The amount of addition of the compound represented by General Formula (1) as the coupling agent can be adjusted such that the number of moles of the conjugated diene-based polymer to the number of moles of the coupling agent react at a desired stoichiometric ratio, and as a result, a desired degree of branching tends to be achieved. It is preferable that the specific number of moles of the polymerization initiator is preferably 5.0 times by mole or more, and more preferably 6.0 times by mole or more, with respect to the number of moles of the coupling agent. In this case, in General Formula (1), the number of functional groups of the coupling agent ($(m - 1) \times i + p \times j + k$) is preferably an integer of 5 to 10, and more preferably an integer of 6 to 10.

In order to obtain the modified conjugated diene-based polymer (A1) having a specific polymer component, the molecular weight distribution (Mw/Mn) of the conjugated diene-based polymer may be set to be preferably 1.5 or more and 2.5 or less, and more preferably 1.8 or more and 2.2 or less. Furthermore, the obtainable modified conjugated diene-based polymer (A1) is preferably such that one peak is detected from the molecular weight curve obtained by GPC.

When the peak molecular weight obtained by GPC of the modified conjugated diene-based polymer (A1) is denoted as $Mp_1$, and the peak molecular weight of the conjugated diene-based polymer is denoted as $Mp_2$, it is preferable that the following formula is established.

$$(Mp_1/Mp_2) < 1.8 \times 10 - 12 \times (Mp_2 - 120\times10^4)^2 + 2$$

It is more preferable that $Mp_2$ is $20\times10^4$ or more and $80\times10^4$ or less, and $Mp_1$ is $30\times10^4$ or more and $150\times10^4$ or less. $Mp_1$ and $Mp_2$ are determined by the method described in the Examples that will be described below.

The modification ratio of the modified conjugated diene-based polymer (A1) is preferably 30% by mass or more, more preferably 50% by mass or more, and even more preferably 70% by mass or more. When the modification ratio is 30% by mass or more, the low hysteresis loss and abrasion resistance of the rubber composition can be further enhanced. Incidentally, the modification ratio is measured by the method described in the Examples that will be described below.

After the reaction step, a deactivating agent, a neutralizing agent, and the like may be added as necessary to the copolymer solution. The deactivating agent is not limited to the following; however, examples thereof include water; and alcohols such as methanol, ethanol, and isopropanol. The neutralizing agent is not limited to the following; however, examples thereof include carboxylic acids such as stearic acid, oleic acid, and versatic acid (a highly branched carboxylic acid mixture having 9 to 11 carbon atoms, mainly having 10 carbon atoms); an aqueous solution of an inorganic acid, and carbon dioxide gas.

Furthermore, from the viewpoint of preventing gel production after polymerization and from the viewpoint of enhancing stability during processing, it is preferable that, for example, an oxidation inhibitor such as 2,6-di-tert-butyl-4-hydroxytoluene (BHT), n-octadecyl-3-(4'-hydroxy-3',5'-di-tert-butylphenyl) propionate, or 2-methyl-4,6-bis[(octylthio)methyl]phenol is added to the modified conjugated diene-based polymer (A1).

Regarding a method of obtaining the modified conjugated diene-based polymer (A1) from the polymer solution, a known method can be used. Examples of the method include a method of separating the solvent by steam stripping or the like, subsequently separating the polymer by filtration, and dehydrating and drying the polymer to obtain the polymer; a method of concentrating the polymer solution in a flushing tank and devolatilizing the polymer solution by vent extrusion or the like; and a method of directly devolatilizing the polymer solution in a drum dryer or the like.

The modified conjugated diene-based polymer (A1) obtained by reacting the coupling agent represented by General Formula (1) with a conjugated diene-based polymer is represented by, for example, the following General Formula (6).

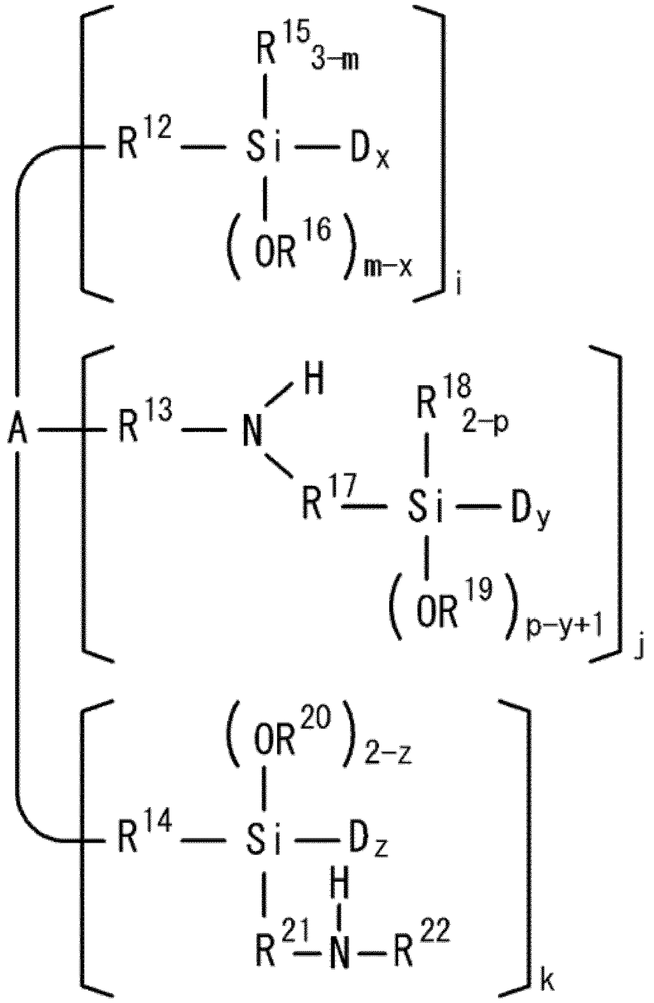

· · · (6)

In General Formula (6), D represents a conjugated diene-based polymer chain, and it is preferable that the weight average molecular weight of the conjugated diene-based polymer chain is $10\times10^4$ to $100\times10^4$. The conjugated diene-based polymer chain is a constituent unit of the modified conjugated diene-based polymer and is, for example, a structural unit derived from a conjugated diene-based polymer, which is produced by reacting a conjugated diene-based polymer with a coupling agent.

$R^{12}$, $R^{13}$, and $R^{14}$ each independently represent a single bond or an alkylene group having 1 to 20 carbon atoms; $R^{15}$ and $R^{18}$ each independently represent an alkyl group having 1 to 20 carbon atoms; $R^{16}$, $R^{19}$, and $R^{20}$ each independently represent a hydrogen atom or an alkyl group having 1 to 20 carbon atoms; $R^{17}$ and $R^{21}$ each independently represent an alkylene group having 1 to 20 carbon atoms; and $R^{22}$ represents a hydrogen atom or an alkyl group having 1 to 20 carbon atoms. m and x each represent an integer of 1 to 3; $x \leq m$; p represents 1 or 2; y represents an integer of 1 to 3; $y \leq (p + 1)$; and z represents an integer of 1 or 2. When pluralities of D, $R^{12}$ to $R^{22}$, m, p, x, y, and z are present, they may be each independent and may be the same or different. Furthermore, i represents an integer of 0 to 6; j represents an integer of 0 to 6; k represents an integer of 0 to 6; (i + j + k) represents an integer of 3 to 10; and $((x \times i) + (y \times j) + (z \times k))$ represents an integer of 5 to 30. A represents a hydrocarbon group having 1 to 20 carbon atoms, or an organic group that has at least one atom selected from the group consisting of an oxygen atom, a nitrogen atom, a silicon atom, a sulfur atom, and a phosphorus atom and does not have active hydrogen. The hydrocarbon group represented by A includes saturated, unsaturated, aliphatic, and aromatic hydrocarbon groups. Examples of the organic group that does not have active hydrogen include organic groups that do not have functional groups having active hydrogen, such as a hydroxy group (-OH), a secondary amino group (>NH), a primary amino group ($-NH_2$), and a sulfhydryl group (-SH).

In the General Formula (6), it is preferable that A is represented by any one of the General Formulae (2) to (5). When A is represented by any one of General Formulae (2) to (5), the low hysteresis loss and abrasion resistance of the rubber composition can be further enhanced.

At least one selected from the modified styrene-butadiene rubber is modified by at least one selected from the group consisting of N,N-bis(trimethylsilyl)-3-[diethoxy(methyl)silyl]propylamine, N-(1,3-dimethylbutylidene)-3-triethoxysilyl-1-propanamine, and tetrakis(3-trimethoxysilylpropyl)-1,3-propanediamine.

The modification site of aminoalkoxysilane-modified SBR may be a molecule terminal or may be the main chain; however, it is preferable that a terminal of styrene-butadiene rubber (SBR) is modified.

As described above, it is preferable that the rubber component contains a modified styrene-butadiene rubber having an amount of bonded styrene of 30% or more (modified SBR with high amount of bonded styrene).

From the viewpoint of having high affinity for a filler (for example, silica), the modified SBR is preferably such that a terminal of SBR is modified with a silane compound. Examples of the silane compound include a silane compound having a glycidoxy group, an alkoxysilane, and a hydrocarbyloxysilane compound.

When a terminal of SBR is modified with a silane compound, the modified SBR has an increased interaction with silica.

The modification site of the modified SBR may be a molecular terminal or may be the main chain; however, it is preferable that a terminal of styrene-butadiene rubber (SBR) is modified.

The rubber component may include another rubber component in addition to the rubber having an isoprene structure, the modified SBR with low amount of bonded styrene, and the modified SBR with high amount of bonded styrene.

Examples of the another rubber component include a modified styrene-butadiene rubber having an amount of bonded styrene of more than 15% and less than 30%, an unmodified styrene-butadiene rubber, a chloroprene rubber, a butyl rubber (IIR), a halogenated butyl rubber, an ethylene-propylene rubber (EPR, EPDM), a fluorine rubber, a silicone rubber, and a urethane rubber.

[Filler]

The rubber composition contains a filler containing a silica having a nitrogen adsorption specific surface area (BET method) of 130 $m^2/g$ or more and less than 330 $m^2/g$. The content of the filler in the rubber composition is 40 to 125 parts by mass per 100 parts by mass of the rubber component.

When the content of the filler in the rubber composition is less than 40 parts by mass per 100 parts by mass of the rubber component, tire reinforcement is insufficiently achieved, and the rolling resistance cannot be lowered. When the content is more than 125 parts by mass, the elastic modulus of the tire becomes too high, and wet grip performance is not excellent.

From the viewpoint of further lowering the rolling resistance, the content of the filler in the rubber composition is preferably 48 parts by mass or more, more preferably 53 parts by mass or more, even more preferably 58 parts by mass or more, and still more preferably 62 parts by mass or more, per 100 parts by mass of the rubber component. Furthermore, from the viewpoint of enhancing the wet grip performance, the content of the filler in the rubber composition is preferably 105 parts by mass or less, more preferably 100 parts by mass or less, even more preferably 95 parts by mass or less, still more preferably 90 parts by mass or less, and even more preferably 85 parts by mass or less, per 100 parts by mass of the rubber component.

(Silica)

The filler contains a silica having a nitrogen adsorption specific surface area (BET method) of 130 $m^2/g$ or more and less than 330 $m^2/g$.

When the nitrogen adsorption specific surface area (BET method) of silica is less than 130 $m^2/g$, the tire cannot be sufficiently reinforced, and the rolling resistance cannot be lowered. Furthermore, when the nitrogen adsorption specific surface area (BET method) of silica is 330 $m^2/g$ or more, the elastic modulus of the tire becomes too high, and the wet grip performance cannot be obtained.

From the viewpoint of further lowering the rolling resistance and enhancing the abrasion resistance of the tire, the nitrogen adsorption specific surface area (BET method) of the silica is preferably 150 $m^2/g$ or more, more preferably 170 $m^2/g$ or more, even more preferably 180 $m^2/g$ or more, still more preferably 190 $m^2/g$ or more, and even more preferably 195 $m^2/g$ or more. From the viewpoint of further enhancing the wet grip performance, the nitrogen adsorption specific surface area (BET method) of the silica is preferably 300 $m^2/g$ or less, more preferably 280 $m^2/g$ or less, and even more preferably 270 $m^2/g$ or less.

The silica is not particularly limited as long as the nitrogen adsorption specific surface area (BET method) is 130 $m^2/g$ or more and less than 330 $m^2/g$, and examples thereof include wet method silica (hydrated silicic acid), dry method silica (anhydrous silicic acid), calcium silicate, and aluminum silicate, while among these, wet method silica is preferred. Regarding these silicas, one kind thereof may be used alone, or two or more kinds thereof may be used in combination.

From the viewpoint of enhancing the mechanical strength of the tire and further lowering the rolling resistance, the content of the silica in the rubber composition is preferably 40 parts by mass or more, more preferably 50 parts by mass or more, and even more preferably 55 parts by mass or more, with respect to 100 parts by mass of the rubber

component. Furthermore, from the viewpoint of further enhancing the wet grip performance, the content of the silica in the rubber composition is preferably 90 parts by mass or less, more preferably 85 parts by mass or less, and even more preferably 80 parts by mass or less, with respect to 100 parts by mass of the rubber component.

(Carbon black)

It is preferable that the filler further includes carbon black. However, it is preferable that carbon black is included such that the content of silica in the filler is in the range of 70% by mass or more. When the content of the silica in the filler is 70% by mass or more, the mechanical strength of the tire can be enhanced, and the rolling resistance can be further lowered. More preferably, the content of the silica in the filler is 80% by mass or more, more preferably the content of the silica in the filler is 85% by mass or more, and even more preferably the content of the silica in the filler is 90% by mass or more and less than 100%.

Carbon black reinforces vulcanized rubber and enhances the abrasion resistance of vulcanized rubber.

The carbon black is not particularly limited, and examples include carbon blacks of GPF, FEF, HAF, ISAF, and SAF grades. These carbon blacks may be used singly, or two or more kinds thereof may be used in combination.

From the viewpoint of enhancing the abrasion resistance of vulcanized rubber, the content of carbon black in the rubber composition is preferably 1 part by mass or more, more preferably 3 parts by mass or more, and even more preferably 5 parts by mass or more. Furthermore, from the viewpoint of the workability of the rubber composition, the content of carbon black in the rubber composition is preferably 20 parts by mass or less, and more preferably 15 parts by mass or less, per 100 parts by mass of the rubber component.

The filler may also include an inorganic filler such as, for example, clay, talc, calcium carbonate, or aluminum hydroxide, in addition to silica and carbon black.

[Hydrogenated resin]

The rubber composition contains a hydrogenated resin having a softening point of higher than 110°C and having a weight average molecular weight as converted to polystyrene of 200 to 1200 g/mol. The content of the hydrogenated resin in the rubber composition is 5 to 50 parts by mass per 100 parts by mass of the rubber component.

When the softening point of the hydrogenated resin is 110°C or lower, the tire cannot be sufficiently reinforced, and the rolling resistance cannot be lowered. From the viewpoint of further lowering the rolling resistance, the softening point of the hydrogenated resin is preferably 115°C or higher, more preferably 118°C or higher, even more preferably 123°C or higher, and still more preferably 125°C or higher. Furthermore, from the viewpoint of the wet grip performance, the softening point of the hydrogenated resin is preferably 145°C or lower, more preferably 138°C or lower, and even more preferably 133°C or lower.

When the weight average molecular weight as converted to polystyrene of the hydrogenated resin is less than 200 g/mol, the hydrogenated resin is precipitated out from the tire, while the effect brought by the hydrogenated resin cannot be sufficiently exhibited, and when the weight average molecular weight as converted to polystyrene of is more than 1200 g/mol, the hydrogenated resin is not compatible with the rubber component.

From the viewpoint of suppressing precipitation of the hydrogenated resin from the tire and suppressing deterioration of the external appearance of the tire, the weight average molecular weight as converted to polystyrene of the hydrogenated resin is preferably 500 or more, more preferably 550 or more, even more preferably 620 or more, still more preferably 670 or more, even more preferably 720 or more, still more preferably 750 or more, and even more preferably 780 or more. Furthermore, from the viewpoint of increasing the compatibility of the hydrogenated resin with the rubber component and further enhancing the effect brought by the hydrogenated resin, the weight average molecular weight as converted to polystyrene of the hydrogenated resin is preferably 1100 or less, more preferably 1050 or less, even more preferably 950 or less, still more preferably 900 or less, and even more preferably 850 or less.

The softening point ($Ts_{HR}$) (unit is °C) of the hydrogenated resin with respect to the weight average molecular weight as converted to polystyrene ($Mw_{HR}$) (unit is g/mol) of the hydrogenated resin is preferably 0.15 or greater [$0.15 \leq (Ts_{HR}/Mw_{HR})$].

($Ts_{HR}/Mw_{HR}$) is more preferably 0.155 or greater, even more preferably 0.158 or greater, still more preferably 0.160 or greater, and even more preferably 0.162 or greater. Furthermore, ($Ts_{HR}/Mw_{HR}$) is preferably 0.2 or less, more preferably 0.185 or less, even more preferably 0.178 or less, still more preferably 0.172 or less, even more preferably 0.168 or less, and still more preferably 0.163 or less.

When the content of the hydrogenated resin in the rubber composition is less than 5 parts by mass per 100 parts by mass of the rubber component, the effect brought by the hydrogenated resin cannot be exhibited, and when the content is more than 50 parts by mass, the hydrogenated resin is precipitated out from the tire, while the effect brought by the hydrogenated resin cannot be sufficiently exhibited.

From the viewpoint of further enhancing the effect brought by the hydrogenated resin, the content of the hydrogenated resin in the rubber composition is preferably 5 parts by mass or more, more preferably 7 parts by mass or more, and even more preferably 9 parts by mass or more, with respect to 100 parts by mass of the rubber component. Furthermore, from the viewpoint of suppressing precipitation of the hydrogenated resin from the tire and suppressing deterioration of the external appearance of the tire, the content of the hydrogenated resin in the rubber composition is preferably 50 parts by mass or less, more preferably 40 parts by mass or less, and even more preferably 30 parts by mass or less, per 100 parts by mass of the rubber component.

A hydrogenated resin means a resin obtainable by subjecting a resin to reduction and hydrogenation.

Examples of the resin that is a raw material of the hydrogenated resin include a $C_5$-based resin, a $C_5$-$C_9$-based resin, a $C_9$-based resin, a terpene-based resin, a dicyclopentadiene-based resin, and a terpene aromatic compound-based resin, and regarding these resins, one kind thereof may be used alone, or two or more kinds thereof may be used in combination.

Examples of the $C_5$-based resin include an aliphatic petroleum resin obtainable by polymerizing a $C_5$ fraction obtainable by thermal cracking of naphtha in petrochemical industry.

The $C_5$ fraction usually includes olefin-based hydrocarbons such as 1-pentene, 2-pentene, 2-methyl-2-butene, 2-methyl-1-butene, and 3-methyl-1-butene; and diolefin-based hydrocarbons such as 2-methyl-1,3-butadiene, 1,2-pentadiene, 1,3-pentadiene, and 3-methyl-1,2-butadiene. Incidentally, regarding the $C_5$-based resin, commercially available products can be utilized.

The $C_5$-$C_9$-based resin refers to a $C_5$-$C_9$-based synthetic petroleum resin, and regarding the $C_5$-$C_9$-based resin, for example, a solid polymer obtainable by polymerizing a petroleum-derived $C_5$-$C_{11}$ fraction by using a Friedel-Crafts catalyst such as $AlCl_3$ or $BF_3$ may be mentioned. More specific examples include copolymers containing styrene, vinyltoluene, $\alpha$-methylstyrene, indene, and the like as main components.

Regarding the $C_5$-$C_9$-based resin, a resin having a reduced amount of $C_9$ or higher components is preferred from the viewpoint of the compatibility with the rubber component. Here, the phrase "a reduced amount of $C_9$ or higher components" implies that the proportion of the $C_9$ or higher components in the total amount of the resin is less than 50% by mass, and preferably 40% by mass or less. Regarding the $C_5$-$C_9$-based resin, commercially available products can be utilized.

Furthermore, the resin that is a raw material of the hydrogenated resin may include, for example, a resin obtainable by copolymerizing a $C_5$ fraction and dicyclopentadiene (DCPD) ($C_5$-DCPD-based resin).

Here, when the proportion of a dicyclopentadiene-derived component in the total amount of the resin is 50% by mass or more, it should be noted that the $C_5$-DCPD-based resin is included in the dicyclopentadiene-based resin. When the proportion of the dicyclopentadiene-derived component in the total amount of the resin is less than 50% by mass, it should be noted that the $C_5$-DCPD-based resin is included in the $C_5$-based resin. The same also applies to the case where a small amount of a third component and the like is further included.

From the viewpoint of increasing the compatibility between the rubber component and the hydrogenated resin, further enhancing the wet grip performance, and further lowering the rolling resistance, the hydrogenated resin is preferably at least one selected from the group consisting of a hydrogenated $C_5$- based resin, a hydrogenated $C_5$-$C_9$-based resin, and a hydrogenated dicyclopentadiene-based resin (hydrogenated DCPD-based resin); more preferably at least one selected from the group consisting of a hydrogenated $C_5$-based resin and a hydrogenated $C_5$-$C_9$-based resin; and even more preferably a hydrogenated $C_5$-based resin. Furthermore, the hydrogenated resin is preferably a resin having at least a hydrogenated DCPD structure or a hydrogenated cyclic structure in the monomer.

(Silane coupling agent)

It is preferable that the rubber composition further contains a silane coupling agent.

Regarding the silane coupling agent, a silane coupling agent that is conventionally used in rubber industry can be used. Furthermore, from the viewpoints of the rolling resistance and wet performance enhancement, it is preferable that the rubber composition includes a silane coupling agent having a mercapto group. Examples of the silane coupling agent having a mercapto group include mercapto group-containing silanes such as $\gamma$-mercaptopropyltrimethoxysilane and $\gamma$-mercaptopropyltriethoxysilane.

(Other softening agent)

The rubber composition according to the present invention may further include a softening agent other than the hydrogenated resin of the present invention (referred to as another softening agent).

Examples of the another softening agent include a thermoplastic resin other than the hydrogenated resin of the present invention and an oil. The rubber composition does not have to include an oil.

Here, the oil is a generic name for extender oils that are included in the rubber component and liquid oils that are added as mixing agents for the rubber composition, and examples thereof include petroleum-based softening agents

such as aroma oil, paraffin oil, and naphthene oil; and plant-based softening agents such as palm oil, castor oil, cotton seed oil, and soybean oil. Among the above-described ones, it is preferable that the rubber composition according to the present invention includes an oil that is liquid at normal temperature such as 25°C, for example, a petroleum-based softening agent such as aroma oil, paraffin oil, or naphthene oil.

From the viewpoint of workability, a preferred ratio of extender oil : mixing agent oil fraction is 1 : 1 to 10 : 1 on a volume basis.

When the rubber component is composed of three kinds of natural rubber/ modified SBR with low amount of bonded styrene/ modified SBR with high amount of bonded styrene, a preferred total amount of the softening agent in the rubber composition according to the present invention is 35% by mass or less, and more preferably 30% by mass or less or 25% by mass or less, and even more preferably 5% by mass or more, 8% by mass or more, or 15% by mass or more.

When the rubber composition according to the present invention includes an oil, from the viewpoint of optimizing the softening point and the molecular weight of the softening agent as a whole, the ratio of a thermoplastic resin (a) including a hydrogenated resin in the total amount (a + b) of a softening agent composed of a thermoplastic resin (a) including a hydrogenated resin and an oil (b) is preferably 50% or more, more preferably 70% or more, and even more preferably 80% or more, on a mass basis. Furthermore, the ratio is preferably 100% or less, and more preferably 95% or less.

As previously described, the rubber composition according to the present invention may further include a thermoplastic resin other than the hydrogenated resin of the present invention. In that case, from the viewpoint of optimizing the softening point of resins as a whole and the molecular weights of the resins, the content ratio of the hydrogenated resin (c) in the total amount (c + d) of the hydrogenated resin (c) and the thermoplastic resin (d) is more preferably 40% or more, even more preferably 50% or more, still more preferably 55% or more, and even more preferably 60% or more, on a mass basis.

Furthermore, from the viewpoint of further enhancing the wet performance, the thermoplastic resin other than the hydrogenated resin is preferably at least one selected from a $C_5$-based resin, a Cg-based resin, a $C_5$-$C_9$- based resin, a terpene-based resin, a terpene aromatic compound-based resin, a rosin-based resin, a dicyclopentadiene resin, and an alkylphenol-based resin, and above all, a resin selected from the group consisting of a $C_9$-based resin and a $C_5$-Cg-based resin is particularly preferred.

(Various components)

The rubber composition according to the present invention may contain the previously described rubber component, filler, and hydrogenated resin, as well as various components that are conventionally used in the rubber industry as necessary, for example, a processability improving agent, stearic acid, an aging inhibitor, zinc oxide, a vulcanization accelerator, and a vulcanizing agent, which are appropriately selected to the extent that does not impair the purpose of the present invention.

[Method of producing rubber composition]

A method of producing the rubber composition according to the present invention is not particularly limited; however, for example, the rubber composition can be produced by mixing various components that have been appropriately selected as necessary to the previously described rubber component, silica, and the hydrogenated resin of the present invention, and subjecting the mixture to kneading, heating, extrusion, and the like.

<Tire>

The tire (pneumatic tire) of the present invention is formed by using the rubber composition according to the present invention.

As previously described, a tire obtainable from the rubber composition according to the present invention has excellent wet grip performance and low rolling resistance. The rubber composition according to the present invention is suitable for the production of a tread part of a tire.

The tire may be obtained by performing molding by using an unvulcanized rubber composition according to the type of the tire to be applied, the member, and the like and then vulcanizing the molded product, or may be obtained by firstly obtaining a semi-vulcanized rubber from an unvulcanized rubber composition by performing a preliminary vulcanization step or the like, subsequently performing molding using this semi-vulcanized rubber, and then further performing main vulcanization. Incidentally, regarding the gas for filling the tire, an inert gas such as nitrogen, argon, or helium can be used in addition to ordinary air or air with an adjusted oxygen partial pressure.

Examples

Hereinafter, the present invention will be described in more detail by way of Examples; however, these Examples are for the purpose of illustrating the present invention and are not intended to be limit the present invention.

<Preparation of rubber composition>

1. Examples 1 to 5, Comparative Examples 1 to 4, and Comparative Example 6

A rubber composition was prepared with the mixing formulation shown in Table 1 or Table 2, by performing mixing in order of a first mixing step and a final mixing step by using a common Banbury mixer. After completion of the first mixing step, the mixture was first taken out from the Banbury mixer, subsequently the mixture was introduced again into the Banbury mixer, and the final mixing step was carried out. Furthermore, the maximum temperature of the mixture in the first mixing step was set to 170°C, and the maximum temperature of the rubber composition in the final mixing step was set to 110°C.

2. Examples 6 and 7, Comparative Example 5, and Comparative Example 7

A rubber composition is prepared with the mixing formulation shown in Table 1 or Table 2, by performing mixing in order of a first mixing step and a final mixing step by using a common Banbury mixer. After completion of the first mixing step, the mixture is first taken out from the Banbury mixer, subsequently the mixture is introduced again into the Banbury mixer, and the final mixing step is carried out. Furthermore, the maximum temperature of the mixture in the first mixing step is set to 170°C, and the maximum temperature of the rubber composition in the final mixing step is set to 110°C.

In Table 1 and Table 2, a blank portion means that the numerical value is 0. The details of the components shown in Table 1 and Table 2 are as follows.

[Rubber component]

NR: Natural rubber

Modified SBR with low amount of bonded styrene: Aminoalkoxysilane-modified styrene-butadiene rubber synthesized by the following method and having an amount of bonded styrene of 15% or less (amount of bonded styrene 10%)
Modified SBR with high amount of bonded styrene 1: Aminoalkoxysilane-modified styrene-butadiene rubber synthesized by the following method and having an amount of bonded styrene of 30% or more (amount of bonded styrene 35%)
Modified SBR with high amount of bonded styrene 2: Aminoalkoxysilane-modified styrene-butadiene rubber synthesized by the following method and having an amount of bonded styrene of 30% or more (amount of bonded styrene 41%)

Unmodified SBR with low amount of bonded styrene: Unmodified styrene-butadiene rubber, manufactured by Asahi Kasei Corp., trade name "TUFDENE 2000" (amount of bonded styrene 23.5%)
Unmodified SBR with high amount of bonded styrene: Unmodified styrene-butadiene rubber (amount of bonded styrene 35% or more)

[Filler and silane coupling agent]

Silica 1: Manufactured by Tosoh Silica Corp., trade name "Nipsil AQ" (BET specific surface area = 220 $m^2$/g)
Silica 2: Silica obtained by the following production method and having a BET specific surface area = 110 $m^2$/g
Silica 3: Silica obtained by the following production method and having a BET specific surface area = 245 $m^2$/g
Carbon black: N234 grade carbon black

Silane coupling agent A: Manufactured by Degussa AG, trade name "Si75"
Silane coupling agent B: Manufactured by Degussa AG, trade name "Si363"
Aluminum hydroxide: Manufactured by Showa Denko K.K., trade name "HIGILITE H-42M"

Oil component: Manufactured by Idemitsu Kosan Co., Ltd., trade name "DIANA PROCESS OIL PS-90"

[Hydrogenated resin]

Resin 1: Hydrogenated C5 resin, manufactured by Eastman Chemical Company, trade name "Registered trademark Impera E1780", softening point = 130°C, weight average molecular weight (Mw) = 800
Resin 2: Hydrogenated C5/DCPD resin, softening point = 113°C, weight average molecular weight (Mw) = 700
Resin 3: C5 resin, manufactured by Tonen Chemical Corp., corresponding to trade name "TrezRA100"
Resin 4: DCPD resin

Each rubber composition of the Examples and Comparative Examples includes, as other components, 5.1 parts by mass of an aging inhibitor including trade name "NOCRAC 6C" manufactured by Ouchi Shinko Chemical Industrial Co., Ltd., 0.3 parts by mass of a vulcanization retarding agent, 1 part by mass of stearic acid, 2.5 parts by mass of zinc oxide, 1.7 parts by mass of sulfur, 2 parts by mass in total of wax, and 2 parts by mass of a workability improving agent. Furthermore, the rubber composition of Example 1 includes 1 part by mass of thiourea.
A vulcanization accelerator package includes a sulfenamide-based vulcanization accelerator.

(Method of synthesizing modified SBR with low amount of bonded styrene)

Into an 800-mL pressure-resistant glass container that had been dried and purged with nitrogen, a cyclohexane solution of 1,3-butadiene and a cyclohexane solution of styrene were introduced so as to provide 67.5 g of 1,3-butadiene and 7.5 g of styrene, 0.6 mmol of 2,2-ditetrahydrofurylpropane was added thereto, 0.8 mmol of n-butyllithium was added thereto, and then polymerization was performed for 1.5 hours at 50°C. In the polymerization reaction system in which the polymerization conversion ratio at this time almost reached 100%, 0.72 mmol of N,N-bis(trimethylsilyl)-3-[diethoxy(methyl)silyl]propylamine as a modifying agent was added thereto, and a modification reaction was performed for 30 minutes at 50°C. Subsequently, 2 mL of a 5 mass% isopropanol solution of 2,6-dit-butyl-p-cresol (BHT) was added thereto to terminate the reaction, and the resultant was dried according to a routine method to obtain a low-St modified SBR. The microstructure of the obtained modified polymer was determined by an infrared method (Morero method), and as a result, the amount of bonded styrene was 10% by mass.

(Method of synthesizing modified SBR with high amount of bonded styrene 1)

Into an 800-mL pressure-resistant glass container that had been dried and purged with nitrogen, a cyclohexane solution of 1,3-butadiene and a cyclohexane solution of styrene were introduced so as to provide 67.5 g of 1,3-butadiene and 7.5 g of styrene, 0.6 mmol of 2,2-ditetrahydrofurylpropane was added thereto, 0.8 mmol of n-butyllithium was added thereto, and then polymerization was performed for 1.5 hours at 50°C. In the polymerization reaction system in which the polymerization conversion ratio at this time almost reached 100%, 0.72 mmol of N-(1,3-dimethylbutylidene)-3-triethoxysilyl-1-propanamine as a modifying agent was added thereto, and a modification reaction was performed for 30 minutes at 50°C. Subsequently, 2 mL of a 5 mass% isopropanol solution of 2,6-dit-butyl-p-cresol (BHT) was added thereto to terminate the reaction, and the resultant was dried according to a routine method to obtain a high-St modified SBR 1. The microstructure of the obtained modified polymer was determined by an infrared method (Morero method), and as a result, the amount of bonded styrene was 35% by mass.

(Method of synthesizing modified SBR with high amount of bonded styrene 2)

1. Production Example for modifying agent

Two vacuum-dried 4-L stainless steel pressure vessels are prepared. 944 g of cyclohexane, 161 g of a compound represented by the following Chemical Formula (2-1), and 86 g of tetramethylethylenediamine are introduced into a first pressure vessel, and a first reaction solution is produced. Simultaneously with this, 318 g of liquid 20 mass% n-butyllithium and 874 g of cyclohexane are introduced into a second pressure vessel, and a second reaction solution is produced. At this time, the molar ratio of the compound represented by the following Chemical Formula (2-1), n-butyllithium, and

tetramethylethylenediamine is 1 : 1 : 1. In a state in which the pressure of each pressure vessel is maintained at 7 bar, the first reaction solution is injected into a first continuous type channel at an injection rate of 1.0 g/min, and the second reaction solution is injected into a second continuous type channel at an injection rate of 1.0 g/min, in a continuous type reactor using a mass flow meter. At this time, the temperature of the continuous type reactor is maintained at -10°C, the internal pressure is maintained at 3 bar by employing a backpressure regulator, and the retention time in the reactor is regulated to be within 10 minutes. The reaction is completed to obtain a modification initiator.

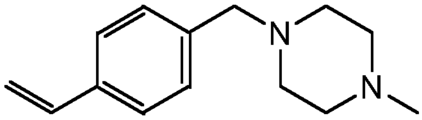
(2-1)

2. Production of modified SBR with high amount of bonded styrene 2

Into a first unit reactor in a continuous reactor having three units of reactors connected in series, a styrene solution in which styrene is dissolved at 60% by mass in n-hexane is injected at a rate of 7.99 kg/h; a 1,3-butadiene solution in which 1,3-butadiene is dissolved at 60% by mass in n-hexane is injected at a rate of 10.55 kg/h; n-hexane is injected at a rate of 47.66 kg/h; a 1,2-butadiene solution in which 1,2-butadiene is dissolved at 2.0% by mass in n-hexane is injected at a rate of 10 g/h; a solution in which 2,2-di(2-(tetrahydrofuryl)propane is dissolved at 10% by mass in n-hexane is injected as a polar additive at a rate of 10.0 g/h; and the modification initiator produced in the above-described Production Example is injected at a rate of 292.50 g/h. At this time, the temperature of the first unit reactor is maintained to be 50°C, and when the polymerization conversion ratio reaches 43%, the polymerization product is transferred from the first reactor to a second reactor through a transfer pipe.

Subsequently, a 1,3-butadiene solution in which 1,3-butadiene is dissolved at 60% by mass in n-hexane is injected into the second reactor at a rate of 0.95 kg/h. At this time, the temperature of the second unit reactor is maintained to be 65°C, and when the polymerization conversion ratio reaches 95% or higher, the polymerization product is transferred from the second reactor to a third reactor through a transfer pipe.

The polymerization product is transferred from the second reactor to the third reactor, and a solution in which the following Formula (1a) is dissolved as a modifying agent is introduced into the third reactor (modifying agent: act. Li = 1 : 1 mol). The temperature of the third reactor is maintained to be 65°C. In Formula (1a), Me represents a methyl group.

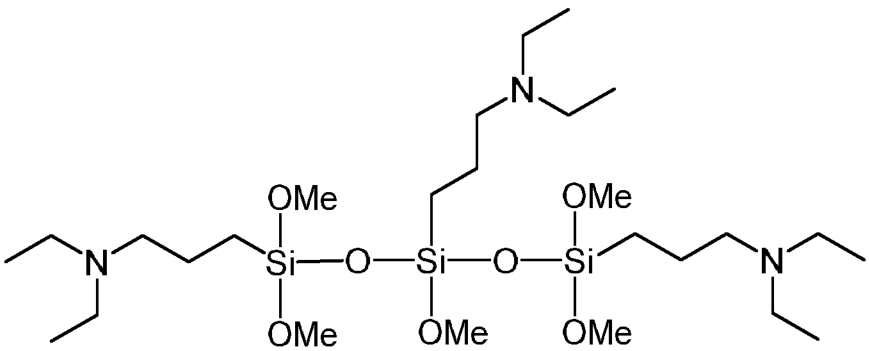
(1a)

Subsequently, an IR1520 (BASF SE) solution in which the compound is dissolved at 30% by mass is injected, as an oxidation inhibitor, at a rate of 170 g/h into the polymerization solution discharged from the third reactor, and the mixture is stirred. As a result, the obtained polymerization product is introduced into hot water heated with steam, the mixture is stirred, the solvent is removed, and thereby the high-St modified SBR 2 is obtained.

Furthermore, the microstructure of the obtained high-St modified SBR 2 has a styrene content of 41% by mass.

(Method of producing silica 2)

Into a 180-liter jacketed stainless steel reaction tank equipped with a stirrer, 65 liters of water and 1.25 liters of an aqueous solution of sodium silicate ($SiO_2$ 160 g/liter, $SiO_2/NA_2O$ molar ratio 3.3) were introduced, and the mixture was heated to 96°C. The $NA_2O$ concentration in the produced solution was 0.015 mol/liter.

While the temperature of this solution was maintained at 96°C, an aqueous solution of sodium silicate similar to the above-described one and sulfuric acid (18 mol/liter) were simultaneously added dropwise thereto, the aqueous solution of sodium silicate being added at a flow rate of 750 milliliters/min, and sulfuric acid being added at a flow rate

of 33 milliliters/min. While adjusting the flow rates, a neutralization reaction was performed while maintaining the $NA_2O$ concentration in the reaction solution in the range of 0.005 to 0.035 mol/liter. The reaction solution began to become cloudy from the middle of the reaction, the viscosity increased after the lapse of 30 minutes, and then the reaction solution became a gel-like solution. Furthermore, addition was continued, and at 100 minutes, the reaction was terminated. The silica concentration in the produced solution was 85 g/liter. Subsequently, sulfuric acid similar to the above-described one was added until the pH of the solution reached 3, and a silicic acid slurry was obtained. The obtained silicic acid slurry was subjected to filtration through a filter press and washing with water to obtain a wet cake. Next, the wet cake was made into a slurry using an emulsifying apparatus, the slurry was dried in a spray type dryer, and silica 2, which was wet method hydrous silicic acid, was obtained.

(Method of producing silica 3)

In the same stainless steel reaction tank as that used in Production Example 1, 89 liters of water and 1.70 liters of an aqueous solution of sodium silicate ($SiO_2$ 160 g/liter, $SiO_2/NA_2O$ molar ratio 3.3) were introduced, and the mixture was heated to 75°C. The $NA_2O$ concentration in the produced solution was 0.015 mol/liter.

While the temperature of this solution was maintained at 75°C, an aqueous solution of sodium silicate similar to that described above and sulfuric acid (18 mol/liter) were simultaneously added dropwise thereto, the aqueous solution of sodium silicate being added at a flow rate of 520 milliliters/min, and sulfuric acid being added at a flow rate of 23 milliliter/min. While adjusting the flow rates, a neutralization reaction was performed while maintaining the $NA_2O$ concentration in the reaction solution in the range of 0.005 to 0.035 mol/liter. The reaction solution began to become cloudy from the middle of the reaction, the viscosity increased after the lapse of 46 minutes, and then the reaction solution became a gel-like solution. Furthermore, addition was continued, and at 100 minutes, the reaction was terminated. The silica concentration in the produced solution was 60 g/liter. Subsequently, sulfuric acid similar to the above-described one was added until the pH of the solution reached 3, and a silicic acid slurry was obtained. Thereafter, silica 3, which was wet method hydrous silicic acid, was obtained in the same manner as in the method of producing silica 2.

<Vulcanization of rubber composition and evaluation of vulcanized rubber>

[Examples 1 to 5, Comparative Examples 1 to 4, and Comparative Example 6]

1. Wet grip performance

A vulcanized rubber specimen obtained by vulcanizing a rubber composition was subjected to initial strain by a viscoelasticity measuring machine. Subsequently, the loss tangent (tan $\delta$) of the vulcanized rubber specimen was measured under the conditions of dynamic strain: 1%, frequency: 52 Hz, and measurement temperature: -5°C, and the performance in the tire was calculated.

The resistance value of Example 1 was taken as 100, and each of the measured values of Examples and Comparative Examples was indicated as an index. A larger index indicates that the resistance value is larger, and the wet grip performance is superior. The results are shown in Table 1 and Table 2. The tolerance is 95 or more.

2. Rolling resistance

A vulcanized rubber specimen obtained by vulcanizing a rubber composition was subjected to initial strain by a viscoelasticity measuring machine. Subsequently, the loss tangent (tan $\delta$) of the vulcanized rubber specimen was measured under the conditions of dynamic strain: 1%, frequency: 52 Hz, and measurement temperature: 50°C, and the performance in the tire was calculated.

The tan $\delta$ of the vulcanized rubber specimen of Example 1 was taken as 100, and each of the measured values of Examples and Comparative Examples was indicated as an index. A smaller index indicates that the rolling resistance is smaller and satisfactory. The results are shown in Table 1 and Table 2. The tolerance is 100 or more.

3. Abrasion resistance

For a vulcanized rubber obtained by vulcanizing a rubber composition, the amount of abrasion at a slip ratio of 100% at room temperature was measured using a DF tester. The tire performance is as shown in the tables.

The amount of abrasion of the vulcanized rubber of Example 1 was taken as 100, and the prediction for each of Examples and Comparative Examples is indicated as an index. A larger index indicates that the amount of abrasion is smaller, and the abrasion resistance is superior. The results are shown in Table 1 and Table 2. The tolerance is 99 or more.

[Examples 6 and 7, Comparative Example 5, and Comparative Example 7]

1. Wet grip performance

A vulcanized rubber specimen obtained by vulcanizing a rubber composition is subjected to initial strain by a viscoelasticity measuring machine. Subsequently, the loss tangent (tan δ) of the vulcanized rubber specimen is measured under the conditions of dynamic strain: 1%, frequency: 52 Hz, and measurement temperature: -5°C, and the performance in the tire is calculated.

The resistance value of Example 1 is taken as 100, and each of the measured values of Comparative Examples is indicated as an index. A larger index indicates that the resistance value is larger, and the wet grip performance is superior. The results are shown in Table 1 and Table 2. The tolerance is 95 or more.

2. Rolling resistance

A vulcanized rubber specimen obtained by vulcanizing a rubber composition is subjected to initial strain by a viscoelasticity measuring machine. Subsequently, the loss tangent (tan δ) of the vulcanized rubber specimen is measured under the conditions of dynamic strain: 1%, frequency: 52 Hz, and measurement temperature: 50°C, and the performance in the tire is calculated.

The tan δ of the vulcanized rubber specimen of Example 1 is taken as 100, and each of the measured values of Comparative Examples is indicated as an index. A smaller index indicates that the rolling resistance is smaller and satisfactory. The results are shown in Table 1 and Table 2. The tolerance is 100 or more.

3. Abrasion resistance

For a vulcanized rubber obtained by vulcanizing a rubber composition, the amount of abrasion at a slip ratio of 60% at room temperature is measured using a DF tester. The tire performance is as shown in the tables.

The amount of abrasion of the vulcanized rubber of Example 1 is taken as 100, and the prediction for each of Comparative Examples is indicated as an index. A larger index indicates that the amount of abrasion is smaller, and the abrasion resistance is superior. The results are shown in Table 1 and Table 2. The tolerance is 99 or more.

Table 1

| | | Example 1 | Example 2 | Example 3 | Example 4 | Example 5 | Example 6 | Example 7 | Comparative Example 1 | Comparative Example 2 |
|---|---|---|---|---|---|---|---|---|---|---|
| NR | Parts | 50 | 70 | 50 | 50 | 50 | 30 | 30 | 50 | 100 |
| Modified SBR with low amount of bonded styrene | Parts | 35 | 30 | 35 | 35 | 35 | 35 | 35 | 35 | |
| Modified SBR with high amount of bonded styrene 1 | Parts | 15 | | 15 | 15 | 15 | | | 15 | |
| Modified SBR with high amount of bonded styrene 2 | Parts | | | | | | 35 | 35 | | |
| Unmodified SBR with low amount of bonded styrene | Parts | | | | | | | | | |
| Unmodified SBR with high amount of bonded styrene | Parts | | | | | | | | | |
| Silica 1 | Parts | | | | | | | 65 | | |
| Silica 2 | Parts | | | | | | | | | |
| Silica 3 | Parts | 65 | 65 | 65 | 65 | 65 | 65 | | 65 | 65 |
| Carbon black | Parts | 5 | 5 | 5 | 5 | 5 | 5 | 5 | 5 | 5 |
| Silane coupling agent A | Parts | 9.75 | | | 9.75 | 9.75 | 9.75 | | 9.75 | 9.75 |
| Silane coupling agent B | Parts | | 6.5 | 6.5 | | | | 6.5 | | |
| Aluminum hydroxide | Parts | 15 | 15 | 15 | 15 | 15 | 15 | 15 | 15 | 15 |
| Oil component | Parts | 2 | 2 | 2 | 2 | 2 | 2 | 7 | 2 | 2 |
| Resin 1 | Parts | 16 | 16 | 16 | 25 | | 16 | 11 | 3 | 16 |
| Resin 2 | Parts | | | | | 16 | | | | |
| Resin 3 | Parts | | | | | | | | | |
| Resin 4 | Parts | | | | | | | | | |
| Vulcanization accelerator package | Parts | 3.5 | 3.5 | 3.5 | 3.5 | 3.5 | 3.5 | 3.5 | 3.5 | 3.5 |
| Wet grip performance (index) | | 100 | 95 | 106 | 95 | 100 | 118 | 118 | 99 | 95 |

(continued)

| | Example 1 | Example 2 | Example 3 | Example 4 | Example 5 | Example 6 | Example 7 | Comparative Example 1 | Comparative Example 2 |
|---|---|---|---|---|---|---|---|---|---|
| Rolling resistance (index) | 100 | 109 | 108 | 101 | 102 | 102 | 110 | 99 | 91 |
| Abrasion resistance (index) | 100 | 112 | 120 | 99 | 115 | 104 | 144 | 118 | 103 |

Table 2

| | | Comparative Example 3 | Comparative Example 4 | Comparative Example 5 | Comparative Example 6 | Comparative Example 7 |
|---|---|---|---|---|---|---|
| NR | Parts | 50 | 50 | | 50 | 70 |
| Modified SBR with low amount of bonded styrene | Parts | | 35 | | 35 | |
| Modified SBR with high amount of bonded styrene 1 | Parts | | 15 | | 15 | |
| Modified SBR with high amount of bonded styrene 2 | Parts | | | 100 | | 30 |
| Unmodified SBR with low amount of bonded styrene | Parts | 35 | | | | |
| Unmodified SBR with high amount of bonded styrene | Parts | 15 | | | | |
| Silica 1 | Parts | 65 | | | | 65 |
| Silica 2 | Parts | | 117 | | | |
| Silica 3 | Parts | | | 65 | 65 | |
| Carbon black | Parts | | 5 | 5 | 5 | |
| Silane coupling agent A | Parts | 12.1875 | 14.04 | | 9.75 | 9.75 |
| Silane coupling agent B | Parts | | | 6.5 | | |
| Aluminum hydroxide | Parts | | 15 | 15 | 15 | 15 |
| Oil component | Parts | | 2 | 2 | 2 | 2 |
| Resin 1 | Parts | 16 | 16 | 16 | | |
| Resin 2 | Parts | | | | | 16 |
| Resin 3 | Parts | | | | | |
| Resin 4 | Parts | | | | 16 | |
| Vulcanization accelerator package | Parts | 3.5 | 3.5 | 3.5 | 3.5 | 3.5 |
| Wet grip performance (index) | | 98 | 103 | 125 | 101 | 112 |
| Rolling resistance (index) | | 93 | 95 | 87 | 93 | 87 |
| Abrasion resistance (index) | | 91 | 88 | 103 | 84 | 87 |

From the results of the Examples shown in Table 1 and Table 2, it is understood that a tire having excellent wet grip performance and low rolling resistance is obtained by using the rubber composition according to the present invention.

Industrial Applicability

The rubber composition according to the present invention can be utilized for a tire, particularly the tread rubber

of a tire.

## Claims

1. A tire obtained by using a rubber composition,

   the rubber composition comprising:
   a rubber component containing a rubber having an isoprene structure and an aminoalkoxysilane-modified styrene-butadiene rubber having an amount of bonded styrene of 15% or less;
   a filler containing a silica having a nitrogen adsorption specific surface area (BET method) of 130 $m^2/g$ or more and less than 330 $m^2/g$, the amount of the filler being 40 to 125 parts by mass per 100 parts by mass of the rubber component; and
   a hydrogenated resin having a softening point of higher than 110°C and having a weight average molecular weight as converted to polystyrene of 200 to 1200 g/mol, the amount of the hydrogenated resin being 5 to 50 parts by mass per 100 parts by mass of the rubber component.

2. The tire according to claim 1, wherein the content of the modified styrene-butadiene rubber in the rubber component is 10% to 90% by mass.

3. The tire according to claim 1 or 2, wherein the content of the rubber having an isoprene structure in the rubber component is 10% to 90% by mass.

4. The tire according to any one of claims 1 to 3, wherein the rubber component further contains a modified styrene-butadiene rubber having an amount of bonded styrene of 30% or more.

5. The tire according to any one of claims 1 to 4, wherein the filler further contains carbon black, and the content of the silica in the filler is 70% by mass or more.

6. The tire according to any one of claims 1 to 5, wherein the hydrogenated resin is at least one selected from the group consisting of a hydrogenated $C_5$-based resin, a hydrogenated $C_5$-$C_9$-based resin, and a hydrogenated dicyclopentadiene-based resin.

7. The tire according to any one of claims 1 to 6, wherein the rubber composition further comprises a silane coupling agent having a mercapto group.

**INTERNATIONAL SEARCH REPORT**

International application No.
PCT/JP2020/037120

A. CLASSIFICATION OF SUBJECT MATTER
Int. Cl. C08L7/00(2006.01)i, B60C1/00(2006.01)i, C08C19/25(2006.01)i, C08K3/04(2006.01)i, C08K3/36(2006.01)i, C08K5/548(2006.01)i, C08L15/00(2006.01)i, C08L57/00(2006.01)i, C08L101/00(2006.01)i
FI: C08L7/00, C08L15/00, C08L101/00, C08L57/00, C08K3/36, C08K3/04, C08K5/548, B60C1/00 Z, C08C19/25

According to International Patent Classification (IPC) or to both national classification and IPC

B. FIELDS SEARCHED

Minimum documentation searched (classification system followed by classification symbols)
Int. Cl. C08L1/00-101/14, C08K3/00-13/08, B60C1/00, C08C19/00-19/44, C08F6/00-246/00, 301/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2019/117168 A1 (BRIDGESTONE CORP.) 20 June 2019, comparative example 5, table 1, paragraphs [0086], [0088], [0093]-[0106], claims 1, 6-8, paragraphs [0005], [0063], [0073] | 1-3, 5, 7<br>1-7 |
| Y | WO 2019/117218 A1 (BRIDGESTONE CORP.) 20 June 2019, claims 1, 4, 7, paragraphs [0007], [0023], [0090]-[0096], [0104]-[0110], [0115], [0116], [0140]-[0145], tables 1, 2, example 4 | 1-7 |
| A | JP 2019-006880 A (BRIDGESTONE CORP.) 17 January 2019, entire text | 1-7 |
| A | WO 2017/188139 A1 (BRIDGESTONE CORP.) 02 November 2017, entire text | 1-7 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08.12.2020 | 22.12.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/037120

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-088988 A (BRIDGESTONE CORP.) 06 May 2011, entire text | 1-7 |
| A | JP 2011-246561 A (THE YOKOHAMA RUBBER CO., LTD.) 08 December 2011, entire text | 1-7 |
| A | WO 2018/159621 A1 (SUMITOMO RUBBER INDUSTRIES, LTD.) 07 September 2018, entire text | 1-7 |
| A | JP 2014-214297 A (SUMITOMO RUBBER INDUSTRIES, LTD.) 17 November 2014, entire text | 1-7 |

Form PCT/ISA/210 (continuation of second sheet) (January 2015)

**INTERNATIONAL SEARCH REPORT**
Information on patent family members

International application No.
PCT/JP2020/037120

| Patent Documents referred to in the Report | Publication Date | Patent Family | Publication Date |
|---|---|---|---|
| WO 2019/117168 A1 | 20.06.2019 | (Family: none) | |
| WO 2019/117218 A1 | 20.06.2019 | (Family: none) | |
| JP 2019-006880 A | 17.01.2019 | (Family: none) | |
| WO 2017/188139 A1 | 02.11.2017 | US 2019/0127559 A1<br>entire text<br>EP 3450491 A1<br>CN 109071887 A | |
| JP 2011-088988 A | 06.05.2011 | (Family: none) | |
| JP 2011-246561 A | 08.12.2011 | US 2013/0059965 A1<br>entire text<br>CN 102884120 A | |
| WO 2018/159621 A1 | 07.09.2018 | US 2020/0009914 A1<br>entire text<br>EP 3591002 A1<br>CN 110382609 A | |
| JP 2014-214297 A | 17.11.2014 | EP 2799480 A1<br>entire text<br>CN 104130461 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015079703 A
- JP 2008184505 A
- WO 2003046020 A
- JP 2007217562 A


### Non-patent literature cited in the description


- **R.R. HAMPTON.** *Analytical Chemistry,* 1949, vol. 21, 923